(19) Europäisches Patentamt
European Patent Office
Office européen des brevets

(11) **EP 3 814 626 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **19732695.2**

(22) Anmeldetag: **27.06.2019**

(51) Internationale Patentklassifikation (IPC):
**F03D 1/02** *(2006.01)*        **F03D 7/02** *(2006.01)*

(52) Gemeinsame Patentklassifikation (CPC):
**F03D 1/02; F03D 7/0204;** F05B 2220/708;
F05B 2250/30; Y02E 10/72

(86) Internationale Anmeldenummer:
**PCT/EP2019/067212**

(87) Internationale Veröffentlichungsnummer:
**WO 2020/002529 (02.01.2020 Gazette 2020/01)**

(54) **SELBSTAUSRICHTENDE WINDTURBINENANLAGE**

SELF-ALIGNING WIND TURBINE INSTALLATION

ÉOLIENNE À ALIGNEMENT AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2018   EP 18180452**

(43) Veröffentlichungstag der Anmeldung:
**05.05.2021   Patentblatt 2021/18**

(73) Patentinhaber: **Wepfer Technics AG**
**8450 Andelfingen (CH)**

(72) Erfinder: **WEPFER, Hans**
**8471 Berg-Dägerlen (CH)**

(74) Vertreter: **Keller Schneider**
**Patent- und Markenanwälte AG**
**Eigerstrasse 2**
**Postfach**
**3000 Bern 14 (CH)**

(56) Entgegenhaltungen:
WO-A2-2011/137903        FR-A- 893 828
US-A1- 2015 247 486      US-A1- 2017 218 919

**Beschreibung**

**Technisches Gebiet**

Die Erfindung betrifft eine selbstausrichtende Windturbinenanlage.

**Stand der Technik**

Selbstausrichtende Windturbinenanalgen sind in von der Anwendung auf dem Wasser bekannt. Die WO 02/073032 und die DE 19846796 offenbaren Kombinationen von auf miteinander verbundenen Repellern, die auf Flössen oder ähnlichen Vorrichtungen schwimmen und an einem gemeinsamen Ankerpunkt oder einer gemeinsamen Boje befestigt sind, der sich ausserhalb der durch die Repeller begrenzten Fläche befindet. Wind und Oberflächenströmung richten diese Windturbinenanlagen so aus, dass die Repeller stets von vorne angeströmt werden. Die DE 19846796 schlägt ausserdem eine Unterstützung beziehungsweise eine Korrektur der Ausrichtung durch Ruder und/oder Antriebe vor, die auf Windrichtungsmessungen reagieren.

Die DE 10 2009 040 648 A1 offenbart eine schwimmfähige Offshore-Windkraftanlage mit einem Schwimmkörper, zumindest einen daran angeordneten Masten, an welchem zumindest einem Rotor drehbar gelagert ist. Der Masten soll einen tropfenförmigen Querschnitt aufweisen, der dazu führt, dass sich der Schwimmkörper leicht und schnell in den Wind dreht um die Rotoren stets optimal zur Windrichtung auszurichten ohne dass eine aufwendige, zusätzliche Verstellung notwendig ist. Die DE 10 2009 040 648 A1 erklärt, dass sich die Anlage selbstständig in den Wind dreht, da der Drehpunkt an dem Fundament ausserhalb des Schwimmkörpers angeordnet ist.

Eine für die Nutzung an Land gedachte Windturbinenanlage offenbart unter anderem die US 6749399: Die Repellermittelpunl<te sind an einem gemeinsamen Turm auf einem Kreis um eine gemeinsame Drehachse angeordnet. Um die Ausrichtung in den Wind zu erreichen, wird der Turm als Ganzes gedreht. Ein anderes Beispiel ist die WO 2010/098813, die Anlagen mit zwei Repellern zeigt. Beide Dokument schlagen vor einen Motor zur Ausrichtung der Anlage in den Wind zu nutzen.

Eine aktive Windausrichtung, die eine Messung, eine Steuerung und Antriebe benötigt, bringt ein gewisses Ausfallpotential und muss gewartet werden. Zudem macht sie die Anlage in der Anschaffung teurer. Eine Selbstausrichtung durch eine Verankerung der Anlange ausserhalb des durch die Rotoren begrenzten Bereichs, ist aus gutem Grund nur für schwimmende Systeme vorgeschlagen worden: Die Lastverteilung wäre an einem Mast auf dem Land derart ungünstig, dass sich kaum eine sinnvolle Lebensdauer der Anlange erreichen lassen würde. Weiterer Stand der Technik ist in US 2015/247486 A1 offenbart.

**Darstellung der Erfindung**

Aufgabe der Erfindung ist es, eine dem eingangs genannten technischen Gebiet zugehörende Windturbinenanlage zu schaffen, welche besonders wartungsarm ist und auf dem Land, insbesondere zur privaten Stromerzeugung und für Kleinerzeuger, genutzt werden kann.

Die Lösung der Aufgabe ist durch die Merkmale des Anspruchs 1 definiert. Gemäss der Erfindung umfasst die selbstausrichtende Windturbinenanlage eine Repelleranordnung mit mindestens drei relativ zueinander starr angeordneten Windhindernissen, von denen mindestens zwei, insbesondere alle Windhindernisse Repeller sind.

Jeder der Repeller der Repelleranordnung weist mindestens einen Flügel auf. Der Flügel kann sich um eine Rotationsachse des jeweiligen Repellers drehen. Der Repeller befindet sich in seiner Betriebsausrichtung, wenn er von vorne angeströmt wird. Ein vorderster und am weitesten von der Rotationsachse entfernter Punkt des genannten Flügels überstreicht bei einer Umdrehung um die Rotationsachse einen Kreis. Dieser Kreis definiert den Radius des Repellers. Der Mittelpunkt dieses Kreises liegt auf der Rotationsachse und definiert den Mittelpunkt des Repellers. Ein Repeller ist ein Windhindernis.

Ein Windhindernis, welches zu der Repelleranordnung gehört und welches kein Repeller ist, ist derart geformt und angeordnet, dass in einer Konfiguration in der der Wind die Repeller der Repelleranordnung von vorne anströmt, seine dem Wind zugewandte Fläche rotationssymmetrisch ist. Die Symmetrieachse verläuft in Windrichtung und definiert die Rotationsachse des Windhindernisses. Die Rotationsachse des Windhindernisses durchstösst das Windhindernis in seinem Mittelpunkt. Der Mittelpunkt des Windhindernisses ist als vorderster, gemeinsamer Punkt von Windhindernis und Rotationsachse des Windhindernisses definiert.

Die Mittelpunkte der mindestens drei Windhindernisse der Repelleranordnung sind in mindestens zwei, parallel zueinander liegenden und voneinander beabstandeten Repellerebenen angeordnet. Dabei stehen die Repellerebenen senkrecht zu den Rotationsachsen der Windhindernisse, insbesondere zu den Rotationsachsen der Repeller. Alle Repeller der Repelleranordnung sind gleich ausgerichtet.

Die Mittelpunkte der mindestens drei Windhindernisse liegen in einer gemeinsamen Anordnungsebene. Die Anordnungsebene steht im Wesentlichen senkrecht zu den Repellerebenen. Die konvexe Hülle aller Mittelpunkte aller Windhindernisse der Repelleranordnung definiert eine Anordnungsfläche.

Die Anordnungsfläche ist spiegelsymmetrisch und weist daher eine Symmetrieachse auf. Die Symmetrieachse verläuft im Wesentlichen parallel zu den Rotationsachsen.

Die Windturbinenanlage umfasst weiter eine Drehachse. Um diese Drehachse ist die Repelleranordnung drehbar, so dass die Selbstausrichtung möglich ist.

Der Durchstosspunkt der Drehachse durch die Anordnungsfläche liegt dabei auf der Symmetrieachse und vor dem Belastungsschwerpunl<t. Der Belastungsschwerpunl<t ist der mit dem Strömungswiderstand der Windhindernisse der Repelleranordnung gewichtete Schwerpunkt.

"Starr zueinander angeordnet" soll hier und im Folgenden bevorzugt, sofern nichts anderes geschrieben wird, bedeuten, dass die Mittelpunkte der Repeller und gegebenenfalls der Windhindernisse und die Rotationsachsen der Repeller und gegebenenfalls der Windhindernisse sich nicht gegeneinander verschieben oder verdrehen können. Es soll dabei aber dennoch eine gewissen Elastizität der Anordnung möglich sein, die es erlaubt ungewöhnlich grosse Kräfte durch eine kurzzeitige Verformung der Anordnung aufzunehmen. Ausserdem schliesst die starre Anordnung es nicht aus, dass sich die Repellerflügel drehen können und dass sich die Anordnung als Ganzes drehen und gegebenenfalls auch verschieben lässt. Auch andere Windhindernisse als Repeller die Teil der Anordnung sind sollen gewisse Bewegungen und Verformungen machen können, obwohl sie starr angeordnet sind, wenn nur ihr Mittelpunkt und ihre Rotationsachse an einer, gegenüber den anderen Teilen der Anordnung, fixen Position und in einer festen Ausrichtung bleibt.

Die Ausrichtung eines Repellers ist die Lage seiner Rotationsachse in Bezug auf die Windrichtung.

Die Betriebsausrichtung eines Repellers ist bevorzugt diejenige Ausrichtung im Wind bei der der Repeller am effizientesten ist, d.h. dem Wind die meiste Energie entzieht.

Durch die Betriebsausrichtung der Repeller der Repelleranordnung definiert, wo bei der Anordnung "vorne" liegt.

Unter "konvexer Hülle" versteht dieses Dokument den Rand der konvexen Hülle im mathematischen Sinne.

Die Definition einer konvexen Hülle im mathematischen Sinn ist folgende:

*Eine Menge von Punkten in der Ebene heißt konvex, wenn sie mit je zwei Punkten auch deren Verbindungsstrecke enthält.*

*Gegeben sei eine Menge M von Punkten in der Ebene. Die konvexe Hülle im mathematischen Sinn von M ist die kleinste konvexe Menge, in der M enthalten ist.*

Bei konvexen Hülle, also dem Rand der konvexen Hülle im mathematischen Sinn, handelt sich also um eine in sich geschlossene Kurve ohne konkave Abschnitte. Stellt man sich die Mittelpunkte als Nägel vor, die in einem Brett stecken, dann erhält man die konvexe Hülle, also den Rand der konvexen Hülle im mathematischen Sinne, indem man ein Gummiband um die Nägel spannt.

Die Anordnungsfläche umfasse alle und nur alle Punkte der konvexen Hülle im mathematischen Sinne.

Die Symmetrieachse einen Fläche soll gemäss der folgenden, üblichen Definition zu verstehen sein:
*Die Fläche ist achsensymmetrisch, falls es eine Gerade gibt, so dass es zu jedem Punkt P der Fläche einen weiteren (eventuell mit P identischen) Punkt P' der Fläche gibt, so dass die Verbindungsstrecke [PP'] von dieser Geraden rechtwinklig halbiert wird. Diese Gerade wird dann Symmetrieachse genannt.*

Die Drehachse ist hier eine geometrische Achse und nicht zwingend eine reale, durchgehende Achse. Es wäre beispielsweise denkbar, dass die Repelleranordnung auf einem zylinderartigen Turm mit einem Kreis- oder Polygonquerschnitt gelagert ist, der sich und die auf ihm gelagerte Repelleranordnung um Ganzen gegenüber dem Boden um die Drehachse drehen kann.

Der Durchstosspunkt der Drehachse durch die Anordnungsfläche ist also derjenige Punkt der Anordnungsfläche, der bei dem Vorgang der Selbstausrichtung in den Wind seine Position gegenüber dem Boden und der Umgebung nicht verändert.

Der Belastungsschwerpunl<t der Mittelpunkt aller Windhindernisse der Repelleranordnung berechnet sich wie folgt:
Ein zweidimensionales kartesisches Koordinatensystem wird so gewählt, dass die Anordnungsfläche sich damit vollständig beschreiben lässt. Die Repelleranordnung soll N Windhindernisse mit je einem Mittelpunkt umfassen. Diese N Mittelpunkte liegen jeweils bei $(x_i, y_i)$, wobei die Mittelpunkt fortlaufend durchnummeriert werden. Der Strömungswiderstand jedes Windhindernisses in seiner Betriebsausrichtung sei beispielsweise durch das Produkt von seinem $c_w$-Wert und seiner Bezugsfläche A gegeben. Der Gewichtungsfaktor $g_i$ ergibt sich dann aus der Bedingung, dass das arithmetische Mittel der Gewichtungsfaktoren gleich 1 sein soll: $g_i = \dfrac{c_{W,i} A_i}{\frac{1}{N} \sum_{j=0}^{N-1} c_{W,j} A_j}$ . Aus dieser Bedingung folgt auch, dass

$$\sum_{i=0}^{N-1} g_i = N$$

.

Dann ergeben sich die Koordinaten des Belastungsschwerpunl<tes als $x_g = \frac{1}{N}\sum_{i=0}^{N-1} g_i x_i$ und $y_g = \frac{1}{N}\sum_{i=0}^{N-1} g_i y_i$ . Auf Grund der geforderten Symmetrie, kann das Koordinatensystem so gewählt werden, dass eine Koordinate des Schwerpunktes gleich Null ist.

Die Anordnungsebene steht im Wesentlichen senkrecht zu den Repellerebenen und die Symmetrieachse verläuft im Wesentlichen parallel zu den Rotationsachsen. Diese Merkmale sollen derart verstanden werden, dass eine Abweichung vom geforderten Winkel zulässig ist, bei der es weiterhin zu einer relevanten Verschattung der Windhindernisse in einer hinteren Repellerebene durch Windhindernisse in einer vorderen Repellerebene kommen kann. Der Winkel zwischen der Senkrechten auf den Repellerebenen und der Anordnungsebene beziehungsweise zwischen den Rotationsachsen und der Symmetrieachse sollte daher zwischen 0° und arctan((R1max+R2max)/D) liegen. R1max ist dabei der grösste Radius eines Windhindernisses in einer vorderen Repellerebene und R2max ist der grösste Radius eines Windhindernisses in einer hinteren Repellerebene und D ist der Abstand zwischen den beiden betrachteten Repellerebenen. Bevorzugt liegt der Winkel zwischen der Senkrechten auf den Repellerebenen und der Anordnungsebene, beziehungsweise zwischen den Rotationsachsen und der Symmetrieachse zwischen 0° und arctan(0.4*(R1max+R2max)/D), besonders bevorzugt sogar nur zwischen 0° und arctan(0. 16*(R1max+R2max)/D).

Es wurde überraschenderweise herausgefunden, dass es auch bereits dann zu einer zuverlässigen Selbstausrichtung kommt, wenn die Drehachse im Bereich zwischen den Repellern angeordnet ist. Damit das für die Selbstausrichtung notwendige Drehmoment bei einer solchen Anordnung aber genügend ausgeprägt ist, sollte es bei nicht optimaler Ausrichtung der Anlage zu einer Windverschattung einzelner Repeller kommen. Da die Drehachse im Bereich zwischen den Repellern angeordnet ist, können die Lasten der Repelleranordnung und weiterer Teile der Windturbinenanlage derart verteilt werden, dass Träger und Lager nicht übermässig belastet werden.

Durch die Windverschattung sinkt der Winddruck auf das verschattete Windhindernis, während er auf den anderen Windhindernissen im Wesentlichen gleich bleibt. Durch die Ungleichverteilung der Kräfte tritt ein Drehmoment auf. Bei der anspruchsgemässen Wahl des Durchstosspunl<tes der Drehachse und nicht zu grossen Sprüngen in der Windrichtung ist das Vorzeichen des Drehmoments so, dass die Repelleranordnung sich wieder in den Wind ausrichtet.

Die resultierende Windturbinenanlage weist somit eine lange Lebensdauer auf und benötigt keine speziellen Antriebe oder Steuerungen um sich in den Wind auszurichten. Sie ist daher besonders wartungsarm.

Im Folgenden wird das Funktionsprinzip mit einigen Beispielrechnungen illustriert.

Auf jedes Windhindernis wirkt eine Winddrucl<l<raft von F (cos(a), sin(a)), wobei a die in Uhrzeigersinn gemessene Abweichung der Windrichtung von der für den Betrieb idealen Windrichtung ist. Das Koordinatensystem sei so gewählt, dass die Symmetrieachse auf der x-Achse verläuft und die Anordnungsfläche in der x-y Ebene liegt. Auch der Durchstosspunkt der Drehachse liegt auf der Symmetrieachse und hat daher die Koordinaten (p, 0).

Betrachtet man die Windverschattung zunächst nicht, so stellt sich die Situation, unter der Annahme von Windhindernissen mit gleichem Strömungswiderstand, wie folgt dar:

Wegen der geforderten Symmetrie, gibt es für jeden Mittelpunkt eines Windhindernisses der Repelleranordnung bei $(x_i, y_i)$ einen weiteren Mittelpunkt eines anderen Windhindernisses der Repelleranordnung bei $(x_i, -y_i)$ oder der betreffende Mittelpunkt liegt auf der Symmetrieachse wo $y_i$ gleich Null ist. Der Abstandvel<tor vom der Durchstosspunkt der Drehachse zu jedem der Windhindernisse ist $r=(x_i-p, y_i)$. Da die Betrachtung im zweidimensionalen Raum ist, ist nur die z-Komponente des Drehmoments ungleich Null. Sie ist $M_z = F \sum_{i=0}^{N-1}(\sin(a)(x_i-p) - y_i\cos(a))$ . Wegen der Symmetrie heben sich alle $y_i$-Terme entweder auf oder sind gleich 0. Somit ist $M_z = F\sin(a)\left[\sum_{i=0}^{N-1} x_i - Np\right]$ . Für 0°<a<180° sollte $M_z$>0 sein, damit die Repelleranordnung sich selbstständig in den Wind dreht. Für a=0° sollte $M_z$=0 sein, damit die Repelleranordnung in dieser gewünschten Stellung verbleibt. Für 180°<a<360° sollte $M_z < 0$ sein, damit die Repelleranordnung sich auf kürzestem Wege selbständig in den Wind dreht. Da sin(a) für 0°<a<180° grösser 0 ist und für 180°<a<360° kleiner als 0 und genau 0 bei a=0° oder 180°, folgt aus den Bedingungen, dass $\sum_{i=0}^{N-1} x_i - Np > 0$ gelten soll. Umgeformt ergibt sich die Bedingung $\frac{1}{N}\sum_{i=0}^{N-1} x_i > p$ , was gerade die Bedingung ist, dass der der Durchstosspunkt der Drehachse vor dem Schwerpunkt der Mittelpunkte der Windhindernisse der Repelleranordnung liegt. Da laut Annahme alle Windhindernisse den gleichen Strömungswiderstand haben, ist die Gewichtung überall gleich 1 und der Schwerpunkt der Mittelpunkte gleich dem Belastungsschwerpunl<t.

Aus dieser Betrachtung folgt zwar einerseits, dass auch ohne Abschattung eine gewisse Selbstausrichtung geschieht, andererseits ist das Drehmoment für der Durchstosspunl<te der Drehachse in der Nähe des Schwerpunktes aber vergleichsweise klein. Um dies zu verdeutlichen, setzen wir $\sum_{i=0}^{N-1} x_i = Nx_s$ , wobei $x_s$ die Position des Schwerpunktes ist. Für das Drehmoment ergibt sich dann $M_z = F\sin(a)N[x_s - p]$. Da F und a vom Wind abhängen, kann $M_z$ nur dadurch vergrössert werden, dass entweder mehr Windhindernisse genutzt werden (N vergrössern) oder der Abstand zwischen Schwerpunkt und der Durchstosspunkt der Drehachse vergrössert wird ($x_s$-p vergrössern). Beiden Optionen sind aber Grenzen gesetzt: Der Einsatz sehr vieler Rotoren führt zu gegenseitiger Behinderung oder einer unerwünscht grossen Anlage. Ein grosser Abstand zwischen Schwerpunkt und der Durchstosspunkt der Drehachse führt zu mechanischen Schwierigkeiten und unerwünschten Belastungen der Lager.

Die vorliegende Anlange geht daher einen dritten Weg und ändert die Grundannahme der oben beschriebenen Rechnung: Die auf die Windhindernisse wirkende Kraft ändert sich in Abhängigkeit der Windrichtung und zwar nicht nur mit dem Sinus-Term der aus dem verschattungslosen Modell bekannt ist.

Die Situation mit Windhindernissen unterschiedlichen Strömungswiderstandes aber ohne Verschattung lässt sich analog betrachten. Wir führen einen Gewichtungsfaktor $g_i$ ein, der den Strömungswiderstand des Windhindernisses bei ($x_i,y_i$) passend gewichtet: F $g_i$ ist die bei a=0° auf das Windhindernis wirkende Kraft. Die Gewichtungsfaktoren gi werden dabei so gewählt, dass ihr arithmetisches Mittel gerade gleich 1 ist, also $\sum_{i=0}^{N-1} g_i = N$ . Für das Drehmoment folgt $M_z = F\left[\sin(a)\sum_{i=0}^{N-1} g_i x_i - \cos(a)\sum_{i=0}^{N-1} g_i y_i - Nsin(a)p\right]$ . Da bei a=0° das Drehmoment verschwinden soll und cos(0)=1 ist, muss $\sum_{i=0}^{N-1} g_i y_i = 0$ sein. Die Windhindernisse müssen also ihrem Strömungswiderstand entsprechend und/oder geeignet symmetrisch angeordnet sein. Wenn dies der Fall ist, ist $M_z = F\,G\,sin(a)\left[\frac{1}{G}\sum_{i=0}^{N-1} g_i x_i - p\frac{N}{G}\right]$ . Wir haben hier $\sum_{i=0}^{N-1} g_i = G$ eingeführt . $\frac{1}{G}\sum_{i=0}^{N-1} g_i x_i = x_g$ ist ein Belastungsschwerpunl<t. Für eine geeignete Selbstausrichtung ergibt sich in diesem Fall also $x_g - p\frac{N}{G} > 0$ bzw. $\frac{G}{N}x_g > p$ . G/N ist der durchschnittliche Gewichtungsfaktor. Durch die Wahl der Gewichtungsfaktoren ist G=N bzw. G/N=1. Es folgt daher die Bedingung $x_g > p$: Die Drehachse sollte also vor dem Belastungsschwerpunl<t liegen, damit eine Selbstausrichtung möglich ist. Für das Drehmoment ergibt sich mit dieser Wahl dann $M_z = F N sin(a)[x_g - p]$. Wo "vorne" ist, ergibt die Betriebsausrichtung.

Die Situation mit Verschattung lässt sich durch eine von a abhängigen Gewichtungsfaktor $g_i(a)$ darstellen. Die Gewichtungsfaktoren werden derart gewählt, dass bei a=0° G(a=0°)/N=1 ist. Ausserdem soll $\sum_{i=0}^{N-1} g_i(a = 0°)y_i = 0$ gelten, damit es kein resultierendes Drehmoment in der Wunschausrichtung a=0° gibt. Ausserhalb von a=0° wird im Allgemeinen $\sum_{i=0}^{N-1} g_i(a = 0°)y_i \neq 0$ sein, da die Verschattung nicht symmetrisch ist.

Zur Illustration nehmen wir an, dass das Windhindernis mit Mittelpunkt (x2, y2) zwischen a=10° und a=80° derart stark abgeschattet wird, das gar kein Druck mehr auf es wirkt, d.h. $g_2(a) = \begin{cases} 0 & 10° \leq a \leq 80° \\ 1 & sonst \end{cases}$ . Alle anderen Windhindernisse haben immer eine Gewichtung von 1. Es gibt ein Windhindernis mit dem Mittelpunkt (x3, y3) am Ort (x2, -y2). Für alle a ausserhalb des Intervalls 10° $\leq a \leq$ 80° ergibt sich das Drehmoment $M_z = F N sin(a)[x_g - p]$. Für das Intervall 10° $\leq a \leq$ 80°hingegen muss der Beitrag von $x_2$ aus der Summe des sin-Terms herausgenommen werden und der nicht mehr kompensierte Beitrag von $y_3$ im Kosinus-Term dazul<ommen. Es ergibt sich:

$M_z = F\left[\sin(a)\left(\sum_{i=0}^{N-1}(x_i - \quad p) - (x_2 - p)\right) - \cos(a)y_3\right] = F N sin(a)\left[x_g - p + \frac{-\cot(a)y_3 - (x_2 - p)}{N}\right]$ . Wegen y3=-y2 folgt schliesslich $M_z = F N sin(a)\left[x_g - p + \frac{1}{N}(\cot(a)y_2 - (x_2 - p))\right]$ . Wenn cot(a)$y_2$ - $x_2$ > 0 ist, dann ist das Drehmoment, verglichen mit der nicht verschatteten Situation, vergrössert. Für den gewünschten Verstärkungseffekt muss also cot(a) $y_2$ > $x_2$ sein, oder $y_2$ > tan(a) $x_2$ sein. Soll der Effekt für das gesamten Winkelintervall von 10° bis 80° positiv sein, so sollte das abgeschattete Windhindernis einen Mittelpunkt aufweisen der die Bedingung $y_2$ > tan(80°) ($x_2$-p) erfüllt. In vielen Fällen wird die Verstärkung des Drehmoments aber primär bei kleineren Winkeln erwünscht sein, so dass auch eine Positionierung des Windhindernisses an anderen Orten von Interesse ist.

Für den allgemeineren Fall von ungleichen Windhindernissen und einer beliebigen, winkelabhängigen Gewichtung des Windhindernisses bei (x2, y2) ergibt sich durch analoge Überlegungen das resultierende Drehmoment

$$M_z = F \, N \sin(a) \left[ x_g - p + \frac{g_2(a=0°) - g_2(a)}{N} \left( \cot(a) \, y_2 - (x_2 - p) \right) \right]$$

. Dabei wurde wiederum angenommen, dass

$\sum_{i=0}^{N-1} g_i = N$ und dass es ein Windhindernis bei (x3, y3)=(x2, -y2) gibt mit g3=g2(a=0). Da eine Abschattung zu einer Abnahme der auf das Windhindernis wirkenden Kraft führt, ist in den meisten Fällen wohl $g_2(a = 0°) \geq g_2(a)$. Für einen Verstärkung des Drehmoments sollte daher auch hier cot(a)$y_2$ - ($x_2$ - $p$) > 0 sein.

Gemäss einer bevorzugten Ausführungsform sind alle Windhindernisse der Repelleranordnung Repeller.

Diese Ausführungsform entzieht dem auf die Repelleranordnung treffenden Wind besonders viel Energie und hat daher einen guten Wirkungsgrad.

In einer anderen Ausführungsform gibt es neben Repellern auch Windhindernisse in der Repelleranordnung.

Die Windhindernisse können beispielsweise durch Solarzellen gebildet werden oder durch Plexiglasscheiben.

Diese Ausführungsform erlaubt es die Selbstausrichtung bereits dann zu nutzen, wenn die Mittel für mehr als zwei Repeller fehlen. Auch kann die Anlage auf diese Art funktionsfähig gehalten werden, wenn ein Repeller ausfällt. Schliesslich kann durch den Einsatz von Solarzellen als Windhindernisse eine Stromversorgung auch zu Zeiten in denen kein Wind weht gegeben sein.

Gemäss einer bevorzugten Ausführungsform ist der Abstand der Mittelpunkte zweier beliebiger Repeller innerhalb einer Repellerebene grösser ist als die Summe der Radien der betrachteten Repeller. Dies ist in dieser Ausführungsform für alle Repeller der Repelleranordnung der Fall.

Eine solche Anordnung erlaubt es, dass die Repeller in ihrer Drehzahl unabhängig voneinander sein dürfen. Es kann also auf eine Steuerung zum Ausgleichen der Drehzahlen verzichtet werden. Auch kann so weitgehend verhindert werden, dass Wirbelbildung an einem Repeller in einer Repellerebene einen zweiten Repeller in derselben Repellerebene negativ beeinflusst. Gemäss Anspruch 1 sind jedoch mindestens zwei Repeller der Repelleranordnung aneinander drehzahlgekoppelt.

Repeller lassen sich auch so anordnen, dass die Flügel "ineinander" greifen: Einen Punkt in der Mitte zwischen zwei derart angeordneten, gleichgrossen Repellern passieren also Flügel beider Repeller und zwar, wenn diese die gleiche Anzahl Flügel aufweisen, immer abwechslungsweise. Eine solche Anordnung ist besonders kompakt.

Erfindungsgemäß sind mindestens zwei Repeller der Repelleranordnung aneinander drehzahlgel<oppelt.

Drehzahlgel<oppelte Repeller sollen derart miteinander verbunden sein, dass ihre Drehzahlen in einem festen Verhältnis zueinander stehen, bevorzugt sollen sie die gleiche Drehzahl aufweisen.

Dies verstärkt den Selbstausrichtungseffel<t: Liegt ein Repeller im Windschatten eines anderen, so würde er ohne Drehzahll<opplung langsamer rotieren, da dem Wind bereits Energie entnommen wurde. Durch die Drehzahl<opplung wird er nun aber zu einer höheren Drehzahl "gezwungen". Der Repeller "saugt" sich also quasi nach vorne, was sich in einer weiteren Reduktion des Winddrucks äusserst, verglichen mit der Situation ohne Drehzahl<opplung. Umgekehrt wird aber auch der nicht verschattete, gekoppelte Repeller durch die Kopplung gebremst: Er dreht nur langsamer als er es ohne Kopplung tun würde. Der Luftwiderstand nimmt daher zu und somit auch der Winddruck auf ihn. Das drehmomenterzeugende I<räfteungleichgewicht wird verstärkt gegenüber dem ungekoppelten Fall.

Erfindungsgemäß treiben mindestens zwei der Repeller der Repelleranordnung einen gemeinsamen Generator an.

Dies hat den Vorteil, dass Kosten reduziert werden können, da die vergleichsweise teure Generatoreinheit weniger oft angeschafft werden muss. Ausserdem kann so eine möglichst günstige Massenverteilung innerhalb der Repelleranordnung realisiert werden.

Erfindungsgemäß sind also mindestens zwei der Repeller der Repelleranordnung drehzahlgel<oppelt und treiben einen gemeinsamen Generator an.

Neben den oben genannten Vorteilen einer Drehzahl<opplung und eines gemeinsamen Generators hat diese Anordnung den Vorteil, dass die Getriebe zwischen den Repellerachsen und der Generatorachse besonders einfach gestaltet werden können.

In einer Ausführungsform ist mindestens ein Repeller der vorderen Repellerebene drehzahlgel<oppelt mit mindestens einem Repeller einer der hinteren Repellerebenen. Die drehzahlgel<oppelten Repeller treiben gemeinsam einen Generator an. Bevorzugt sind alle Repeller der Repelleranordnung aneinander drehzahlgel<oppelt und treiben gemeinsam einen Generator an.

Die Drehzahl<opplung zwischen Repellern zweiter Repellerebenen hat den Vorteil, dass es zu einer Windverschattung des Repellers der hinteren Repellerebene durch den mit ihm drehzahlgel<oppelten Repeller der vorderen Repellerebene kommen kann. Da der vordere Repeller durch die Kopplung gegenüber seiner freien Umdrehungsgeschwindigkeit gebremst wird, nehmen sein Widerstand und damit die Effizienz seiner Windabschattungsfähigl<eit zu. Der Windverschattungseffel<t kann also deutlicher zum Tragen kommen.

Die Nutzung eines gemeinsamen Generators ist I<osteneffiziert, erlaubt eine günstige Verteilung des Gewichtes und lässt sich dank der Drehzahll<opplung besonders einfach erreichen.

In einer Ausführungsform liegen alle Mittelpunkte der Windhindernisse der Repelleranordnung auf der konvexen Hülle der Mittelpunkte aller Windhindernisse der Repelleranordnung.

Es gibt also kein Windhindernis, welcher zu Repelleranordnung gehört und abseits vom Rand, in der Anordnungsfläche liegt.

Diese Ausführungsform hat den Vorteil, dass es nur wenig Störungen der Repeller untereinander gibt. Ausserdem kann die starre Verbindung zwischen den Repellern einfach erreicht werden und in der freien Anordnungsfläche ist Platz für andere Bauteile, wie beispielweise den Generator oder Solarpaneele.

In einer anderen Ausführungsform liegen Windhindernisse der Repelleranordnung mit ihren Mittelpunkten auch innerhalb der Anordnungsfläche. Dies erlaubt eine kompakte Bauweise.

In einer Ausführungsform sind alle Repeller der Windturbinenanlage Teil der Repelleranordnung.

Dies hat den Vorteil, dass alle Repeller für die Selbstausrichtung genutzt werden können.

In einer anderen Ausführungsform umfasst die Windturbinenanlage Repeller die nicht zur Repelleranordnung gehören.

Nicht zur Repelleranordnung gehörende Repeller können beispielswiese ober- oder unterhalb der Anordnungsebene liegen oder ihre Anordnung ist nicht symmetrisch. Derartige Repeller können für Messungen oder für eine von der Repelleranordnung unabhängige Stromerzeugung genutzt werden. Die Ausrichtung solche Repeller kann in Abhängigkeit der Repelleranordnung geschehen oder sie können durch eigene Windfahnen oder Motoren ausgerichtet werden. Ausserdem kann es auch Repeller mit fester Ausrichtung in eine häufig vorkommende Windrichtung geben.

In einer bevorzugten Ausführungsform ist der Winkel zwischen einer Senkrechten auf die Repellerebene und jeder der Verbindungslinien zwischen dem Mittelpunkt eines beliebigen Repellers der ersten Repellerebene und dem Mittelpunkt eines beliebigen Repellers einer zweiten Repellerebene, die ungleich der der ersten Repellerebene ist, grösser als $\arctan((r1+r2)/h)$. Insbesondere ist dieser Winkel grösser ist als $3°+\arctan((r1+r2)/h)$. $r1$ und $r2$ sind die Repellerradien der betrachteten Repeller. $h$ ist der Abstand zwischen der ersten und der zweiten Repellerebene.

Betrachtet man die Repelleranordnung von vorne, so überlappen sich die Repeller in dieser Ausführungsform nirgendwo. Es kommt also bei $a=0°$ zu keiner nennenswerten Verschattung eines Repellers durch einen anderen. Da es insbesondere an den Enden der Flügel zu Turbulenzen kommt und diese sich etwas ausweiten mit zunehmenden Abstand zum Repeller, kann es sinnvoll sein den Winkel zwischen Senkrechter auf die Repellerebene und der Verbindungslinie der Mittelpunkte grösser als $3°+\arctan((r1+r2)/h)$ zu wählen: Damit sinkt die Gefahr, dass der hintere Repeller bei idealer Anströmung, also $a=0°$, in die vom vorderen Repeller verursachten Turbulenzen gerät.

In einer anderen Ausführungsform ist der Winkel zwischen einer Senkrechten auf die Repellerebene und zumindest eine einzelnen Verbindungslinie zweier Mittelpunkte kleiner als $\arctan((r1+r2)/h)$. Für den Preis einer etwas geringeren Leistung kann so eine kompaktere Bauweise erreicht werden.

In einer Ausführungsform haben alle Repeller der Repelleranordnung, insbesondere alle Repeller der Windturbinenanlage, denselben Radius.

Die Nutzung gleicher Bauteile an mehreren Orten in der Anlage erleichtert die Wartung und das Zurverfügungstellung von Ersatzteilen. Ausserdem lässt sich so ein gegebenes Volumen optimal genutzt werden, da auf Grund der Selbstausrichtung der der wechselnden Windrichtungen der grösste Repeller an verschiedenen Positionen relativ zur Umgebung sein kann und dieses gesamte Gebiet freigehalten werden muss.

In einer anderen Ausführungsform gib es Repeller unterschiedlicher Radien in einer Repelleranordnung. Dies kann einerseits ermöglichen, dass die Anlage für verschiedene Windstärken jeweils zumindest teilweise optimal arbeitet und andererseits kann die Selbstausrichtungsfunl<tion so optimiert werden, da ein grosser Repeller einen kleineren über einen weiteren Winkelbereich vollständig abdecken kann als dies mit zwei gleich grossen Repellern möglich wäre. $g_i(a)$ ist durch die Wahl der Repellerradien auf diese Art beeinflussbar.

In einer Ausführungsform umfasst die Repelleranordnung genau drei Repeller. Bevorzugt umfasst die Windturbinenanlage genau drei Repeller.

Wenn alle Windhindernisse Repeller sind, so handelt es sich bei dieser Ausführungsform um die erfindungsgemässe Ausführungsform mit den wenigsten Repellern. Dies hat neben einem einfachen Aufbau den Vorteil, dass es nur zu geringen Störungen der Repeller untereinander kommt. Die Anlage lässt sich mechanisch einfach realisieren und gut auf die gewünschten Eigenschaften anpassen.

Eine Anlage mit drei Repellern und zwei Windhindernissen kann dann eingesetzt werden, wenn es für die gewünschte Selbstausrichtungsfunl<tion notwendig ist, weil beispielsweise eine Verstärkung über einen weiteren oder anderen Winkelbereich erwünscht ist als über die Repeller alleine erreichbar.

Eine Windturbinenanlage mit genau drei Repellern umfasst bevorzugt eine Repelleranordnung mit genau drei Repellern und hat damit die oben beschriebenen Vorteile. Der Verzicht auf weitere Repeller hat den Vorteil, dass die Anlange einfacher und günstiger ist und die Zusatzrepeller die Repeller der Repelleranordnung weder mechanisch noch strömungstechnisch behindern oder stören.

In einer Ausführungsform sind genau ein Repeller der Repelleranordnung mit Radius r1 mit seinem Mittelpunkt in der vordersten Repellerebene und genau zwei Repeller der Repelleranordnung mit Radius r2 mit ihren Mittelpunkten in einer zweiten Repellerebene angeordnet. Die erste und die zweite Repellerebene haben den Abstand h voneinander, so dass die konvexe Hülle der Mittelpunkte ein gleichschenkliges Dreieck darstellt.

Gemäss der Einführung ist das resultierende Drehmoment, wenn nur ein Repeller verdeckt werden kann, in seiner allgemeinsten Form folgendes:

$$M_z = F\,N\sin(a)\left[x_g - p + \sum \frac{g_i(a=0°) - g_i(a)}{N}(\cot(a)\,y_i - (x_i - p))\right]$$

In der Dreiecksanordnung, bei der die Spitze des Dreiecks in Betriebsausrichtung in den Wind zeigt, können von den Windrichtungen a zwischen 0° und 180° genau zwei Repeller verdeckt werden: Im Bereich mit a zwischen 0° und 90° kann der vorderste Repeller, hier mit Index 1 bezeichnet, den bei positiven y-Werten in der hinteren Repellerebene liegenden Repeller mit Index 3 verdecken. Im Bereich mit a zwischen 90° und 180° kann der bei negativen y-Werten in der hinteren Repellerebene liegenden Repeller mit Index den vorderen Repeller 1 verdecken.

Für die Z-Komponente des Drehmoments folgt also:

$$M_z = F\,N\sin(a)\left[x_g - p + \frac{g_3(a=0°) - g_3(a)}{N}(\cot(a)\,y_3 - (x_3 - p))\right.$$
$$\left. + \frac{g_1(a=0°) - g_1(a)}{N}(\cot(a)\,y_1 - (x_1 - p))\right]$$

Da die Repelleranordnung ausschliesslich Repeller umfasst, nehmen wir an, dass der cW-Wert aller Repeller gleich ist und sie sich nur in ihre Bezugsfläche $A = \pi r^2$ unterscheiden. Bei a=0° sind die Gewichtungen also folgende:

$$g_1 = \frac{c_W \pi r_1^2}{\frac{1}{3}c_W \pi (2r_2^2 + r_1^2)} = \frac{3r_1^2}{2r_2^2 + r_1^2}\,, \ g_2 = g_3 = \frac{c_W \pi r_2^2}{\frac{1}{3}c_W \pi (2r_2^2 + r_1^2)} = \frac{3r_2^2}{2r_2^2 + r_1^2}$$

Die Koordinaten der Mittelpunkte sind $(x_1, y_1) = (0,0)$, $(x_2, y_2) = (h,-h\tan(b))$, $(x_3, y_3) = (h, h\tan(b))$.

Um die Abhängigkeit der Verschattung vom Winkel abzuschätzen, nehmen wir an, dass die Bezugsfläche des verschatteten Repellers um den verschatteten Teil abnimmt.

Die Schnittfläche zweier Kreise (mit den Radien r1 und r2) lässt sich wie folgt berechnen, wobei d der Abstand der beiden Mittelpunkte voneinander ist. Dabei sollte der arccos im Bogenmass sein.

$$S(a) = r_1^2 \arccos\left(\frac{r_1^2 - r_2^2 + d(a)^2}{2d(a)r_1}\right) + r_2^2 \arccos\left(\frac{r_2^2 - r_1^2 + d(a)^2}{2d(a)r_2}\right)$$
$$- \frac{r_1^2 - r_2^2 + d(a)^2}{2d(a)}\sqrt{r_1^2 - \left(\frac{r_1^2 - r_2^2 + d(a)^2}{2d(a)}\right)^2}$$
$$- \frac{r_2^2 - r_1^2 + d(a)^2}{2d(a)}\sqrt{r_2^2 - \left(\frac{r_2^2 - r_1^2 + d(a)^2}{2d(a)}\right)^2}$$

Hier ist $d = h \cdot ||\tan(a)| - \tan(b)|$, da $h|\tan(a)|$ die Position vom "Schatten" des Mittelpunktes des vorderen Repellers ist und $h\tan(b)$ die Position vom verschatteten Repeller.

Für d > r1+r2 ist S=0.

Die Verschattung des Repellers 3 durch den Repeller 1 kommt daher nur für die folgenden Winkel vor:

$$\arctan\left(\frac{h\,tan(b) - (r_1 + r_2)}{h}\right) \le a \le \arctan\left(\frac{h\,tan(b) + (r_1 + r_2)}{h}\right)$$

Die Verschattung des Repellers 1 durch Repeller 2 kommt daher nur für die folgenden Winkel vor:

$$180° - \arctan\left(\frac{h\,tan(b) + (r_1 + r_2)}{h}\right) \le a \le 180° - \arctan\left(\frac{h\,tan(b) - (r_1 + r_2)}{h}\right)$$

Für r1=r2=r und im Verhältnis der Gesamtl<reisfläche $\pi r^2$ ausgedrückt, vereinfacht sich S(a) zu:

$$\frac{S(a)}{\pi r^2} = \frac{2}{\pi}\left[\arccos\left(\frac{d(a)}{2r}\right) - \frac{d(a)}{2r}\sqrt{1 - \left(\frac{d(a)}{2r}\right)^2}\right]$$

$$g_3(a) = \frac{c_W\left(\pi r_2^2 - S_3(a)\right)}{\frac{1}{3}c_W\pi(2r_2^2 + r_1^2)} = \frac{3\left(\pi r_2^2 - S_3(a)\right)}{\pi(2r_2^2 + r_1^2)} = 1 - \frac{S_3(a)}{\pi r^2}$$

$$g_1(a) = \frac{c_W\left(\pi r_1^2 - S_1(a)\right)}{\frac{1}{3}c_W\pi(2r_2^2 + r_1^2)} = \frac{3\left(\pi r_1^2 - S_1(a)\right)}{\pi(2r_2^2 + r_1^2)} = 1 - \frac{S_1(a)}{\pi r^2}$$

wobei mit S1 und S3 hier der Beitrag der Abschattung im jeweils relevanten Winkelbereich gemeint ist.

Beispielhaft setzen nehmen wir hier an, dass r1=r2=1 und b=45° sei. Um kein Überlappen bei a=0° zu haben, soll h=cot(b) (r1+r2)=2*cot(45°)=2 sein. Der erste Repellermittelpunl<t kann bei (0,0) sein, der zweite und dritte je bei (2,-2) und (2,2). Damit ergibt sich:

$$d = 2 \cdot ||\tan(a)| - 1|$$

$$S_1(a) = \begin{cases} 2\arccos\left(\frac{d(a)}{2}\right) - d(a)\sqrt{1 - \left(\frac{d(a)}{2}\right)^2} & 180° - \arctan(2) < a < 180° \\ 0 & 0 \le a \le 180° - \arctan(2) \end{cases}$$

$$S_3(a) = \begin{cases} 2\arccos\left(\frac{d(a)}{2}\right) - d(a)\sqrt{1 - \left(\frac{d(a)}{2}\right)^2} & 0° < a < \arctan(2) \approx 63.4° \\ 0 & \arctan(2) \le a \le 180° \end{cases}$$

$$g_1 = g_2 = g_3 = 1$$

$$g_3(a) = \frac{(\pi - S(a))}{\pi} = 1 - \frac{S(a)}{\pi}$$

$$x_g = \frac{1}{3}(0 + 2 + 2) = \frac{4}{3}$$

$$M_z = F\, 3\sin(a)\left[\frac{4}{3} - p + \frac{1 - \left(1 - \frac{S_3(a)}{\pi}\right)}{3}(\cot(a)\,2 - 2 + p)\right.$$

$$\left. + \frac{1 - \left(1 - \frac{S_1(a)}{\pi}\right)}{3}(\cot(a)\,0 + p)\right]$$

$$= F\,\sin(a)\left[4 - 3p + \frac{S_3(a)}{\pi}(\cot(a)\,2 - 2 + p) + \frac{S_1(a)}{\pi}p\right]$$

Durch die Abschattung gibt es, im Vergleich zum nicht-verschatteten Fall, eine Erhöhung des positiven Drehmomentes um a=0° herum. Die Erhöhung ist maximal bei a=b und 180°-b.

Für den Fall einer Dreiecksanordnung mit einer Drehachse, die genau im Belastungsschwerpunl<t die Anordnungsebene durchstösst, ist das resultierende Drehmoment in dem Bereich positiv, in dem es zu einer Verschattung kommt. Es gibt wie im Fall ohne Verschattung, kein Drehmoment ausserhalb der Verschattungszone.

Allgemeiner betrachtet sieht der Fall von 3 Repellern in einer Dreiecksanordnung, bei der die Spitze des Dreiecks im Betriebszustand in den Wind gerichtet ist, wie folgt aus.

Die Repeller in der hinteren Repellerebene sollen den Durchmesser r2 haben, und der Repeller in der vorderen Repellerebene soll den Durchmesser r1 haben.

Ohne Einschränkung der Allgemeinheit sollen die drei Repeller wie folgt angeordnet und nummeriert sein:

$$(x_1, y_1) = (0,0); (x_2, y_2) = \left(y(r_1 + r_2)\cot(b), -y(r_1 + r_2)\right); (x_3, y_3) = (y(r_1 +$$

$$r_2)\cot(b), y(r_1 + r_2))$$

Der Abstand der Repellerebenen ist $h = y(r_1 + r_2)\cot(b)$

Der Abstand der Mittelpunkte der sich überschattenden Repeller ist:

$$d(a) = y(r_1 + r_2)\cot(b)\,||\tan(a)| - \tan(b)| \;\rightarrow$$

$$\frac{d(a)}{r_2} = y\left(\frac{r_1}{r_2} + 1\right)\cot(b)\,||\tan(a)| - \tan(b)|$$

(Um den Vorzeichenwechsel des tan(a) zu verhindern wird hier der Betrag genommen)

$$g_1(a = 0°) = \frac{3r_1^2}{2r_1^2 + r_2^2} = \frac{3\left(\frac{r_1}{r_2}\right)^2}{2\left(\frac{r_1}{r_2}\right)^2 + 1}; g_2(a = 0°) = g_3(a = 0°) = \frac{3r_2^2}{2r_1^2 + r_2^2} = \frac{3}{2\left(\frac{r_1}{r_2}\right)^2 + 1}$$

und

$$g_1(a) = \frac{3\left(r_1^2 - \frac{S_1(a)}{\pi}\right)}{2r_1^2 + r_2^2} = \frac{3}{2\left(\frac{r_1}{r_2}\right)^2 + 1}\left(\left(\frac{r_1}{r_2}\right)^2 - \frac{S_1(a)}{\pi r_2^2}\right) = g_1(a = 0°) - \frac{S_1(a)}{\pi r_2^2}\frac{3}{2\left(\frac{r_1}{r_2}\right)^2 + 1}$$

$$g_3(a) = \frac{3\left(r_2^2 - \frac{S_3(a)}{\pi}\right)}{2r_1^2 + r_2^2} = \frac{3}{2\left(\frac{r_1}{r_2}\right)^2 + 1}\left(1 - \frac{S_3(a)}{\pi r_2^2}\right) = g_3(a = 0°) - \frac{S_3(a)}{\pi r_2^2}\frac{3}{2\left(\frac{r_1}{r_2}\right)^2 + 1}$$

$$x_g = \frac{1}{3}\sum_{i=1}^{3} g_i(a = 0°)x_i = \frac{1}{3}\left(0 + \frac{3y(r_1 + r_2)\cot(b)}{2\left(\frac{r_1}{r_2}\right)^2 + 1} + \frac{3y(r_1 + r_2)\cot(b)}{2\left(\frac{r_1}{r_2}\right)^2 + 1}\right)$$

$$= \frac{2y(r_1 + r_2)\cot(b)}{2\left(\frac{r_1}{r_2}\right)^2 + 1} = \frac{2h}{2\left(\frac{r_1}{r_2}\right)^2 + 1}$$

$$\frac{S(a)}{\pi r_2^2} = \frac{1}{\pi}\left[\left(\frac{r_1}{r_2}\right)^2 \arccos\left(\frac{\left(\frac{r_1}{r_2}\right)^2 - 1 + \left(\frac{d(a)}{r_2}\right)^2}{2\left(\frac{d(a)}{r_2}\right)\left(\frac{r_1}{r_2}\right)}\right) + \arccos\left(\frac{1 - \left(\frac{r_1}{r_2}\right)^2 + \left(\frac{d(a)}{r_2}\right)^2}{2\left(\frac{d(a)}{r_2}\right)}\right)\right.$$

$$- \frac{\left(\frac{r_1}{r_2}\right)^2 - 1 + \left(\frac{d(a)}{r_2}\right)^2}{2\left(\frac{d(a)}{r_2}\right)}\sqrt{\left(\frac{r_1}{r_2}\right)^2 - \left(\frac{\left(\frac{r_1}{r_2}\right)^2 - 1 + \left(\frac{d(a)}{r_2}\right)^2}{2\left(\frac{d(a)}{r_2}\right)}\right)^2}$$

$$\left. - \frac{1 - \left(\frac{r_1}{r_2}\right)^2 + \left(\frac{d(a)}{r_2}\right)^2}{2\left(\frac{d(a)}{r_2}\right)}\sqrt{1 - \left(\frac{1 - \left(\frac{r_1}{r_2}\right)^2 + \left(\frac{d(a)}{r_2}\right)^2}{2\left(\frac{d(a)}{r_2}\right)}\right)^2}\right]$$

Der Repeller 3 wird im Winlkelbereich $\arctan\left(\tan(b)\frac{(y-1)}{y}\right) \le a \le \arctan\left(\tan(b)\frac{(y+1)}{y}\right)$ von Repeller 1 verdeckt. Im Bereich von $\arctan\left(\tan(b)\left(1 - \frac{1}{y}\frac{\left|1-\left(\frac{r_1}{r_2}\right)\right|}{1+\left(\frac{r_1}{r_2}\right)}\right)\right) < a < \arctan\left(\tan(b)\left(1 + \frac{1}{y}\frac{\left|1-\left(\frac{r_1}{r_2}\right)\right|}{1+\left(\frac{r_1}{r_2}\right)}\right)\right)$ liegt die Fläche eines der Repellers vollständig innerhalb der anderen. Die Überscheidungsfläche ist daher gleich der Fläche des kleineren Repellerl<reises.

$$\frac{S_3(a)}{\pi r_2^2} = 0 \; f\ddot{u}r \; 0° \le a < \arctan\left(\tan(b)\frac{(y-1)}{y}\right) \; und \; \arctan\left(\tan(b)\frac{(y+1)}{y}\right) < a$$

$$\le 180°$$

$$\frac{S_3(a)}{\pi r_2^2} = \frac{S(a)}{\pi r_2^2} \ f\ddot{u}r \ arctan\left(tan(b)\frac{(y-1)}{y}\right) \leq a$$

$$\leq arctan\left(tan(b)\left(1 - \frac{1}{y}\frac{\left|1-\left(\frac{r_1}{r_2}\right)\right|}{1+\left(\frac{r_1}{r_2}\right)}\right)\right) \ und \ arctan\left(tan(b)\left(1\right.\right.$$

$$\left.\left.+ \frac{1}{y}\frac{\left|1-\left(\frac{r_1}{r_2}\right)\right|}{1+\left(\frac{r_1}{r_2}\right)}\right)\right) \leq a \leq arctan\left(tan(b)\frac{(y+1)}{y}\right)$$

$$\frac{S_3(a)}{\pi r_2^2} = \min\left(1,\left(\frac{r_1}{r_2}\right)^2\right) f\ddot{u}r \ arctan\left(tan(b)\left(1 - \frac{1}{y}\frac{\left|1-\left(\frac{r_1}{r_2}\right)\right|}{1+\left(\frac{r_1}{r_2}\right)}\right)\right)$$

$$< a < arctan\left(tan(b)\left(1 + \frac{1}{y}\frac{\left|1-\left(\frac{r_1}{r_2}\right)\right|}{1+\left(\frac{r_1}{r_2}\right)}\right)\right)$$

Der Repeller 1 wird im Winkelbereich $180° - arctan\left(tan(b)\frac{(y+1)}{y}\right) \leq a \leq 180° - arctan\left(tan(b)\frac{(y-1)}{y}\right)$ von Repeller 2 verdeckt. Im Bereich von

$$180° - arctan\left(tan(b)\left(1 + \frac{1}{y}\frac{\left|1-\left(\frac{r_1}{r_2}\right)\right|}{1+\left(\frac{r_1}{r_2}\right)}\right)\right) < a < 180° - arctan\left(tan(b)\left(1 - \frac{1}{y}\frac{\left|1-\left(\frac{r_1}{r_2}\right)\right|}{1+\left(\frac{r_1}{r_2}\right)}\right)\right)$$

liegt die Fläche eines der Repellers vollständig innerhalb der anderen. Die Überscheidungsfläche ist daher gleich der Fläche des kleineren Repellerkreises. $\frac{S_1(a)}{\pi r_2^2}$ gleight daher $\frac{S_3(a)}{\pi r_2^2}$ mit diesen anderen Grenzen.

Für das Drehmoment ergibt sich:

$$M_z = F \ N \ sin(a)\left[x_g - p + \frac{g_3(a = 0°) - g_3(a)}{N}\left(cot(a)\,y_3 - (x_3 - p)\right) \right.$$

$$\left. + \frac{g_1(a = 0°) - g_1(a)}{N}\left(cot(a)\,y_1 - (x_1 - p)\right)\right]$$

mit

$$g_{3,1}(a) = g_{3,1}(a = 0°) - \frac{S_{3,1}(a)}{\pi r_2^2}\frac{3}{2\left(\frac{r_1}{r_2}\right)^2 + 1}$$

ergibt sich dann

$$M_z = F\,3\,sin(a)\left[x_g - p + \frac{\frac{S_3(a)}{\pi r_2^2}}{2\left(\frac{r_1}{r_2}\right)^2 + 1}\left(y(r_1 + r_2)cot(a) - y(r_1 + r_2)cot(b) + p\right)\right.$$

$$\left. + \frac{\frac{S_1(a)}{\pi r_2^2}}{2\left(\frac{r_1}{r_2}\right)^2 + 1}\left(cot(a)\,0 - 0 + p\right)\right]$$

Dieser Ausdruck lässt sich besser verstehen, wenn man die Höhe $h = y(r_1 + r_2)cot(b)$ des Dreiecks ausklammert:

$$M_z = 3F\,h\,sin(a)\left[\frac{x_g}{h} - \frac{p}{h} + \frac{1}{2\left(\frac{r_1}{r_2}\right)^2 + 1}\left(\frac{S_3(a)}{\pi r_2^2}\left(\frac{\tan(b)}{\tan(a)} - 1 + \frac{p}{h}\right) + \frac{S_1(a)}{\pi r_2^2}\frac{p}{h}\right)\right]$$

mit $\frac{x_g}{h} = \frac{2}{2\left(\frac{r_1}{r_2}\right)^2 + 1}$

$S_3(a)$ ist nur für $0° \leq a \leq 90°$ ungleich 0. Der Tangens ist in diesem Bereich positiv. Der Ausdruck in der runden Klammer ist daher sicher positiv, solange $0° \leq a < b$ und wird für grössere b negativ, wobei die Grenze von p/h abhängt. Für a > 90° ist $S_3(a) = 0$.

$S_1(a)$ ist grösser oder gleich 0. Grösser als Null ist $S_1(a)$ bei Winkeln zwischen 90° und 180°.

Der gesuchte Verstärkungseffekt der Selbstausrichtungsfunl<tion tritt also zwischen

$$arctan\left(tan(b)\frac{(y-1)}{y}\right) \leq a < b + Etwas\ abhängig\ von\frac{p}{h}$$

ein und dann wieder bei

$$180° - \arctan\left(\tan(b)\frac{(y+1)}{y}\right) \leq a \leq 180° - \arctan\left(\tan(b)\frac{(y-1)}{y}\right).$$

Der Effekt ist am stärksten bei gleich grossen Repellern, also $\frac{r_1}{r_2} = 1$. Dies ist der Fall wegen dem Faktor $\frac{1}{2\left(\frac{r_1}{r_2}\right)^2 + 1}$. Ansonsten erreicht S(a) für $\frac{r_1}{r_2} > 1$ ein Plateau, welches die selbe Höhe aufweist wie das Maximum von S(a) bei $\frac{r_1}{r_2} = 1$. Auch bei $\frac{r_1}{r_2} < 1$ gibt es ein Plateau: Dieses liegt aber tiefer.

In einer Ausführungsform wird der Abstand zweier Repellerebenen, der Radius des grössten Repellers in der hinteren Ebene, der durch einen Repeller in der vorderen Ebene abgeschattet werden kann und der der Durchstosspunkt der Drehachse derart gewählt, dass das Verhältnis des Drehmomentes mit Abschattungseffekt zum Drehmoment ohne Abschattungseffekt bei einer Anströmung von Wind mit einem Windwinl<el grösser oder gleich 1.05 ist. Der Windwinl<el ist gleich dem Winkel zwischen der Verbindungslinie vom abschattenden zum abgeschatteten Repeller und der Symmetrieachse.

Damit der Verschattungseffel<t deutlich zu spüren ist, sollte die durch die Verschattung erzeugte Amplitude signifikant sein im Vergleich zur unverschatteten Amplitude.

Für das Drehmoment gilt:

$$M_z = NFhsin(a)\left[\frac{x_g}{h} - \frac{p}{h} - \sum_{i=verschattete\ Repeller} \frac{g_i}{N}\frac{S_i(a)}{\pi r^2}\left(\left(\frac{x_i}{h} - \frac{p}{h}\right) - \frac{y_i}{h}cot(a)\right)\right]$$

Die unverschattete Amplitude ist also:

$$A_{unverschattet} = \sin(a)\left(\frac{x_g}{h} - \frac{p}{h}\right)$$

Die verschattet Amplitude ist also:

$$A_{verschattet} = \sin(a)\frac{g_i}{N}\frac{S_i(a)}{\pi r^2}\left(\frac{y_i}{h}\cot(a) - \left(\frac{x_i}{h} - \frac{p}{h}\right)\right) + \sin(a)\left(\frac{x_g}{h} - \frac{p}{h}\right)$$

Wir betrachtet das Verhältnis bei a=b. In diesem Fall betrifft die Verschattung einen Repeller in der hinteren Repellerebene und daher ist $\frac{x_i}{h} = 1$ und $\frac{S_i(a=b)}{\pi r^2} = 1$, da der Repeller bei diesem Winkel vollständig verschattet ist.

Für das Verhältnis folgt daher:

$$\frac{A_{verschattet}}{A_{unverschattet}} = \frac{\sin(b)\frac{g_i}{N}\frac{S_i(b)}{\pi r^2}\left(\frac{y_i}{h}\cot(b) - \left(\frac{x_i}{h} - \frac{p}{h}\right)\right)}{\sin(b)\left(\frac{x_g}{h} - \frac{p}{h}\right)} + 1 = \frac{g_i}{N}\frac{\frac{y_i}{h}\cot(b) - \left(1 - \frac{p}{h}\right)}{\frac{x_g}{h} - \frac{p}{h}} + 1$$

Nun fällt aber die Effizienz der Abschattung mit zunehmender Entfernung zwischen den Repellern ab. Wir nehmen an, dass diese Effizienz durch eine Exponentialfunktion approximiert werden kann:

$$E(d) = \exp(-0.3d)$$

wobei d der Abstand zwischen den Repellern in Einheiten der Repellerradien r ist. Bei 10 Repellerradien ist die Effizienz der Abschattung also auf 5% abgefallen.

Der Abstand der Repeller ist h/cos(b). In Einheiten von r also $d = \frac{\frac{h}{r}}{\cos(b)}$

$$E\left(\frac{r}{h}, b\right) = \exp\left(-\frac{0.3\frac{h}{r}}{\cos(b)}\right)$$

Für die Effizienz der Abschattung folgt:

Für das Amplitudenverhältnis ergibt sich also:

$$\frac{A_{verschattet}}{A_{unverschattet}} = \frac{g_i}{N}\frac{\frac{y_i}{h}\cot(b) - \left(1 - \frac{p}{h}\right)}{\frac{x_g}{h} - \frac{p}{h}}\exp\left(-\frac{0.3\frac{h}{r}}{cos(b)}\right) + 1$$

Im Fall eines "Dreiecks im Wind" mit 3 gleichen Repellern ist $y_i$=h tan(b), N=3 und $g_i$=1 und $x_g$/h=2/3 und somit

$$\frac{A_{verschattet}}{A_{unverschattet}} = \frac{1}{3}\frac{\frac{p}{h}}{\frac{2}{3} - \frac{p}{h}}\exp\left(-\frac{0.3\frac{h}{r}}{cos(b)}\right) + 1 = \frac{1}{2\frac{h}{p} - 3}\exp\left(-\frac{0.3\frac{h}{r}}{cos(b)}\right) + 1$$

h/p kann Werte zwischen 0 und $x_g$/h=2/3 annehmen.

Bevorzugt liegt eine wirksame Abschattung genau dann vor, wenn $\frac{A_{verschattet}}{A_{unverschattet}} \geq 1.05$ ist.

Für einen gegebenen halben Öffnungswinkel b und einen gegeben der Durchstosspunkt der Drehachse p/h ergibt sich aus dieser Bedingung das grösste bevorzugte Verhältnis von h/r:

$$\frac{h}{r} \leq \frac{-\ln\left(0.05\left(2\frac{h}{p} - 3\right)\right)\cos(b)}{0.3}$$

Gleichzeitig ist das Verhältnis h/r aber nach unten beschränkt, da eine Verschattung bei a=0° vermieden werden sollte: $\frac{h}{r} \geq \frac{2}{\tan(b)} = \frac{2\cos(b)}{\sin(b)}$ sein.

$$\frac{2}{\tan(b)} \leq \frac{h}{r} \leq \frac{-\ln\left(0.05\left(2\frac{h}{p}-3\right)\right)\cos(b)}{0.3}$$

Da für eine grossen Verschattungseffekt h/r möglichst klein sein sollte, ergibt sich das grösste Verschattungsverhältnis bei $\frac{h}{r} = \frac{2}{\tan(b)}$. Dort ist das Verhältnis folgendes:

$$\frac{A_{verschattet}}{A_{unverschattet}} = \frac{1}{2\frac{h}{p}-3}\exp\left(-\frac{0.6}{sin(b)}\right) + 1$$

Durch die Signifikanzforderung von $\frac{A_{verschattet}}{A_{unverschattet}} \geq 1.05$ folgt nun, dass $\frac{1}{2\frac{h}{p}-3}\exp\left(-\frac{0.6}{sin(b)}\right) \geq 0.05$ oder $\frac{p}{h} \geq \frac{2}{3+\frac{\exp\left(-\frac{0.6}{sin(b)}\right)}{0.05}}$ sein soll. Daraus folgt wiederum, dass es nur bei $\frac{p}{h} \geq 0.1431$ ein b gibt, bei dem diese Bedingungen erfüllt sind.

Bevorzugt liegt daher $0.1431 \leq \frac{p}{h} \leq \frac{x_g}{h}$ im Fall der Anordnung eines "Dreiecks im Wind". Ein grösseres p/h führt dabei zu einer deutlicheren Abschattung.

Ist hingegen p/h gegeben, so ergibt die Signifikanzforderung eine Bedingung für den halben Öffnungswinkel:

$$\sin(b) \geq -\frac{0.6}{\ln\left(0.05\left(\frac{2h}{p}-3\right)\right)}$$

Die Ausdehnung des Dreiecks sollte daher bevorzugt folgendes sein:

$$2\sqrt{\frac{1}{\sin(b)^2}-1} \leq \frac{h}{r} \leq \frac{-\ln\left(0.05\left(2\frac{h}{p}-3\right)\right)\cos(b)}{0.3}$$

wobei der Verschattungseffekt bei der unteren Grenze von h/r am deutlichsten auftritt.

Bei b=45° ergibt sich also, dass $\frac{p}{h} \geq \frac{2}{3+\frac{\exp\left(\frac{0.6}{sin(b)}\right)}{0.05}} = 0.173$ und $\frac{h}{r} = 2\sqrt{\frac{1}{\sin(b)^2}-1} = 2$.

Bei p/h=1/3 ergibt sich also $\sin(b) \geq -\frac{0.6}{\ln(0.05(6-3))} = 0.316 \rightarrow b \geq 18.4°$ und $\frac{h}{r} \leq 6$, je nach Wahl von b.:

$$2\sqrt{\frac{1}{\sin(b)^2}-1} \leq \frac{h}{r} \leq 6.324\cos(b)$$

Gibt es eine bevorzugte Höhe des Dreiecks, beispielsweise h/r=3, so folgt, dass b=33.7° sein sollte und

$$\frac{p}{h} \geq \frac{2}{3 + \frac{\exp\left(-\frac{0.6}{\sin(b)}\right)}{0.05}} = 0.204$$
.

Diese Parameterkombinationen zeichnen sich jeweils dadurch aus, dass der Abschattungseffekt bei a=b signifikant ist und es bei a=0° keine Abschattung gibt.

In einer Ausführungsform einer selbstausrichtenden Windturbinenanlage sind genau zwei Repeller der Repelleranordnung mit Radius r2 mit ihren Mittelpunkten in der vordersten Repellerebene angeordnet und genau ein Repeller der Repelleranordnung mit Radius r1 ist mit seinem Mittelpunkt in einer zweiten Repellerebene angeordnet. Die konvexe Hülle der Mittelpunkte stellt ein gleichschenkliges Dreieck dar.

Diese Ausführungsform unterscheidet sich von der vorherigen durch die Betriebsrichtung.

Ohne Einschränkung der Allgemeinheit sollen die drei Repeller wie folgt angeordnet und nummeriert sein:

$$(x_1, y_1) = \left(0, -y(r_1 + r_2)\right); (x_2, y_2) = \left(y(r_1 + r_2)\cot(b), 0\right); (x_3, y_3) = \left(0, y\,(r_1 + r_2)\right)$$

Der Abstand der Repellerebenen ist $h = y(r_1 + r_2)\cot(b)$

Der Abstand der Mittelpunkte der sich überschattenden Repeller ist:

$$d(a) = y(r_1 + r_2)\cot(b)\,||\tan(a)| - \tan(b)| \;\rightarrow$$

$$\frac{d(a)}{r_2} = y\left(\frac{r_1}{r_2} + 1\right)\cot(b)\,||\tan(a)| - \tan(b)|$$

(Um den Vorzeichenwechsel des tan(a) zu verhindern wird hier der Betrag genommen)

$$g_1(a = 0°) = g_3(a = 0°) = \frac{3r_1^2}{2r_1^2 + r_2^2} = \frac{3\left(\frac{r_1}{r_2}\right)^2}{2\left(\frac{r_1}{r_2}\right)^2 + 1}; g_2(a = 0°) = \frac{3r_2^2}{2r_1^2 + r_2^2} = \frac{3}{2\left(\frac{r_1}{r_2}\right)^2 + 1}$$

und

$$g_2(a) = \frac{3\left(r_2^2 - \frac{S_2(a)}{\pi}\right)}{2r_1^2 + r_2^2} = \frac{3}{2\left(\frac{r_1}{r_2}\right)^2 + 1}\left(1 - \frac{S_2(a)}{\pi r_2^2}\right) = g_2(a = 0°) - \frac{S_2(a)}{\pi r_2^2}\frac{3}{2\left(\frac{r_1}{r_2}\right)^2 + 1}$$

$$g_3(a) = \frac{3\left(r_1^2 - \frac{S_3(a)}{\pi}\right)}{2r_1^2 + r_2^2} = \frac{3}{2\left(\frac{r_1}{r_2}\right)^2 + 1}\left(\left(\frac{r_1}{r_2}\right)^2 - \frac{S_3(a)}{\pi r_2^2}\right) = g_3(a = 0°) - \frac{S_3(a)}{\pi r_2^2}\frac{3}{2\left(\frac{r_1}{r_2}\right)^2 + 1}$$

$$x_g = \frac{1}{3}\sum_{i=1}^{3} g_i(a = 0°)x_i = \frac{1}{3}\left(0 + \frac{3y(r_1 + r_2)\cot(b)}{2\left(\frac{r_1}{r_2}\right)^2 + 1} + 0\right) = \frac{y(r_1 + r_2)\cot(b)}{2\left(\frac{r_1}{r_2}\right)^2 + 1}$$

$$= \frac{h}{2\left(\frac{r_1}{r_2}\right)^2 + 1}$$

$$\frac{S(a)}{\pi r_2^2} = \frac{1}{\pi}\left[\left(\frac{r_1}{r_2}\right)^2 \arccos\left(\frac{\left(\frac{r_1}{r_2}\right)^2 - 1 + \left(\frac{d(a)}{r_2}\right)^2}{2\left(\frac{d(a)}{r_2}\right)\left(\frac{r_1}{r_2}\right)}\right) + \arccos\left(\frac{1 - \left(\frac{r_1}{r_2}\right)^2 + \left(\frac{d(a)}{r_2}\right)^2}{2\left(\frac{d(a)}{r_2}\right)}\right)\right.$$

$$-\frac{\left(\frac{r_1}{r_2}\right)^2 - 1 + \left(\frac{d(a)}{r_2}\right)^2}{2\left(\frac{d(a)}{r_2}\right)}\sqrt{\left(\frac{r_1}{r_2}\right)^2 - \left(\frac{\left(\frac{r_1}{r_2}\right)^2 - 1 + \left(\frac{d(a)}{r_2}\right)^2}{2\left(\frac{d(a)}{r_2}\right)}\right)^2}$$

$$\left.-\frac{1 - \left(\frac{r_1}{r_2}\right)^2 + \left(\frac{d(a)}{r_2}\right)^2}{2\left(\frac{d(a)}{r_2}\right)}\sqrt{1 - \left(\frac{1 - \left(\frac{r_1}{r_2}\right)^2 + \left(\frac{d(a)}{r_2}\right)^2}{2\left(\frac{d(a)}{r_2}\right)}\right)^2}\right]$$

Der Repeller 2 wird im Winkelbereich $arctan\left(tan(b)\frac{(y-1)}{y}\right) \leq a \leq arctan\left(tan(b)\frac{(y+1)}{y}\right)$ von Repeller

$$arctan\left(tan(b)\left(1 - \frac{1}{y}\frac{\left|1-\left(\frac{r_1}{r_2}\right)\right|}{1+\left(\frac{r_1}{r_2}\right)}\right)\right) < \quad a < arctan\left(tan(b)\left(1 + \frac{1}{y}\frac{\left|1-\left(\frac{r_1}{r_2}\right)\right|}{1+\left(\frac{r_1}{r_2}\right)}\right)\right)$$

1 verdeckt. Im Bereich von liegt die Fläche eines der Repellers vollständig innerhalb der anderen. Die Überscheidungsfläche ist daher gleich der Fläche des kleineren Repellerl<reises.

$$\frac{S_2(a)}{\pi r_2^2} = 0 \ f\ddot{u}r\ 0° \leq a < arctan\left(tan(b)\frac{(y-1)}{y}\right) \ und \ arctan\left(tan(b)\frac{(y+1)}{y}\right) < a$$

$$\leq 180°$$

$$\frac{S_2(a)}{\pi r_2^2} = \frac{S(a)}{\pi r_2^2} \ f\ddot{u}r \ arctan\left(tan(b)\frac{(y-1)}{y}\right) \leq a$$

$$\leq arctan\left(tan(b)\left(1 - \frac{1}{y}\frac{\left|1-\left(\frac{r_1}{r_2}\right)\right|}{1+\left(\frac{r_1}{r_2}\right)}\right)\right) \ und \ arctan\left(tan(b)\left(1\right.\right.$$

$$\left.\left.+\frac{1}{y}\frac{\left|1-\left(\frac{r_1}{r_2}\right)\right|}{1+\left(\frac{r_1}{r_2}\right)}\right)\right) \leq a \leq arctan\left(tan(b)\frac{(y+1)}{y}\right)$$

$$\frac{S_2(a)}{\pi r_2^2} = \min\left(1, \left(\frac{r_1}{r_2}\right)^2\right) \ f\ddot{u}r \ arctan\left(tan(b)\left(1 - \frac{1}{y}\frac{\left|1-\left(\frac{r_1}{r_2}\right)\right|}{1+\left(\frac{r_1}{r_2}\right)}\right)\right)$$

$$< a < arctan\left(tan(b)\left(1 + \frac{1}{y}\frac{\left|1-\left(\frac{r_1}{r_2}\right)\right|}{1+\left(\frac{r_1}{r_2}\right)}\right)\right)$$

Der Repeller 3 wird im Winkelbereich

$$180° - \arctan\left(\tan(b)\frac{(y+1)}{y}\right) \leq a \leq 180° - \arctan\left(\tan(b)\frac{(y-1)}{y}\right)$$

von Repeller 2 verdeckt. Im Bereich von

$$180° - \arctan\left(\tan(b)\left(1+\frac{1}{y}\frac{\left|1-\left(\frac{r_1}{r_2}\right)\right|}{1+\left(\frac{r_1}{r_2}\right)}\right)\right) < a < 180° - \arctan\left(\tan(b)\left(1-\frac{1}{y}\frac{\left|1-\left(\frac{r_1}{r_2}\right)\right|}{1+\left(\frac{r_1}{r_2}\right)}\right)\right)$$

liegt die Fläche eines der Repellers vollständig innerhalb der anderen. Die Überscheidungsfläche ist daher gleich der Fläche des kleineren Repellerl<reises. $\dfrac{S_3(a)}{\pi r_2^2}$ ist daher analog zu $\dfrac{S_2(a)}{\pi r_2^2}$, wobei der einzige Unterschied in den oben genannten Grenzen liegt.

$$M_z = F\,N\,\sin(a)\left[x_g - p + \frac{g_2(a=0°)-g_2(a)}{N}(\cot(a)\,y_2-(x_2-p)) + \frac{g_3(a=0°)-g_3(a)}{N}(\cot(a)\,y_3-(x_3-p))\right]$$

mit $g_{2,3}(a) = g_{2,3}(a=0°) - \dfrac{S_{2,3}(a)}{\pi r_2^2}\dfrac{3}{2\left(\frac{r_1}{r_2}\right)^2+1}$ und N=3 ergibt sich dann

$$M_z = F\,3\,\sin(a)\left[x_g - p + \frac{\frac{S_2(a)}{\pi r_2^2}}{2\left(\frac{r_1}{r_2}\right)^2+1}(\cot(a)\,0 - y(r_1+r_2)\cot(b)+p) + \frac{\frac{S_3(a)}{\pi r_2^2}}{2\left(\frac{r_1}{r_2}\right)^2+1}(\cot(a)\,y(r_1+r_2)-0+p)\right]$$

Dieser Ausdruck lässt sich besser verstehen, wenn man die Höhe $h = y(r_1+r_2)\cot(b)$ des Dreiecks ausklammert:

$$M_z = 3F\,h\,\sin(a)\left[\frac{x_g}{h} - \frac{p}{h} + \frac{\frac{S_2(a)}{\pi r_2^2}}{2\left(\frac{r_1}{r_2}\right)^2+1}\left(\frac{p}{h}-1\right) + \frac{\frac{S_3(a)}{\pi r_2^2}}{2\left(\frac{r_1}{r_2}\right)^2+1}\left(\frac{\tan(b)}{\tan(a)}+\frac{p}{h}\right)\right]$$

$$M_z = 3F\,h\,\sin(a)\left[\frac{x_g}{h} - \frac{p}{h} + \frac{1}{2\left(\frac{r_1}{r_2}\right)^2+1}\left(\frac{S_3(a)}{\pi r_2^2}\left(\frac{\tan(b)}{\tan(a)}+\frac{p}{h}\right)+\frac{S_2(a)}{\pi r_2^2}\left(\frac{p}{h}-1\right)\right)\right]$$

mit $\dfrac{x_g}{h} = \dfrac{1}{2\left(\frac{r_1}{r_2}\right)^2+1}$

Da p/h < 1 ist, ist der $S_2$ Beitrag immer negativ oder 0. $S_3$ kann nur im Bereich zwischen $90° \leq a \leq 180°$ ungleich 0 sein und dort ist der tan(a) negativ, daher ist auch der $S_3$ Anteil oft negativ und bei p/h =0 sogar immer.

Die Abschattung verringert also das selbstausrichtende Drehmoment über weite Bereiche von a. Die Verminderung ist am deutlichsten bei $\dfrac{r_1}{r_2} = 1$. Die Winkel a bei denen eine Verminderung eintritt sind zwischen

$$arctan\left(tan(b)\frac{(y-1)}{y}\right) \le a \le arctan\left(tan(b)\frac{(y+1)}{y}\right)$$

und

$$180° - arctan\left(tan(b)\frac{(y+1)}{y}\right) \le a \le 180° - arctan\left(tan(b)\frac{(y-1)}{y}\right) -$$ *etwas abhängig von* $\frac{p}{h}$ .

Die Abschattung kann also eingesetzt werden, wenn hohe Drehmomente vermieden werden sollen.

Diese Anordnung, die im Folgenden auch als "Dreieck gegen den Wind" bezeichnet wird, hat weiter den Vorteil einer guten Flächennutzung: Das Verhältnis der Anordnungsfläche zur Fläche die für die Selbstausrichtung der Repelleranordnung freigehalten werden muss, ist grösser als im Fall "Dreieck im Wind". Da die Anordnungsfläche kaum verschattet wird, kann sie mit Solarpaneelen bedeckt werden. Je grösser das Verhältnis der Anordnungsfläche für die Selbstausrichtung zur benötigten Fläche ist, desto besser wird die zur Verfügung stehende Fläche ausgenutzt.

In einer Ausführungsform einer Windturbinenanlage mit genau drei Repellern mit Radius r, deren Mittelpunkte eine konvexe Hülle in Form eines gleichschenkligen Dreiecks haben, liegt der halbe Öffnungswinkel b des gleichschenkligen Dreiecks zwischen 10° und 50°, bevorzugt bei etwa 25°.

Eine solche Anordnung hat den Vorteil, dass das Verhältnis von Drehmoment zu Trägheitsmoment sein Maximum bei vergleichsweise grossen Windrichtungswinkeln hat. Somit reagiert die Repelleranordnung bei grossen Abweichungen von der Soll-Windrichtung stärker als bei kleineren. Die Repelleranordnung ist so weniger nervös und richtet sich dennoch zügig selbst aus wenn es eindeutig notwendig ist.

Die Repeller und gegebenenfalls die Windhindernisse sind diejenigen Lasten, auf die die Repelleranordnung nicht verzichten kann. Die Verbindungselemente zwischen ihnen, die die geforderte starre Verbindung herstellen, sind bevorzugt leicht im Vergleich zu den Repellern. Wir gehen daher hier von einer Fläche mit Punktmassen an den Orten der Mittelpunkte aus.

Das Trägheitsmoment bezüglich einer Drehachse am Punkt (p, 0), senkrecht zur Anordnungsfläche, ist bei N Punktmassen $I = \sum_{i=0}^{N-1} m_i r_i^2 = \sum_{i=0}^{N-1} m_i[(x_i - p)^2 + y_i^2]$ .

Im Fall eines in den Wind gerichteten Dreiecks mit drei gleich grossen und gleich schweren Repellern befinden sich die Repeller und, damit gemäss unserer Annahme auch die Massenpunkte, bei (0,0), (h, h tan(b)) und (h, -h tan(b)). p soll irgendwo vor dem Belastungsschwerpunkt bei 2/3 h liegen.

$$I = m\left[(-p)^2 + 0 + 2 \cdot (h-p)^2 + 2 \cdot h^2 tan(b)^2\right]$$
$$= m\left[p^2 + 2h^2 + 2p^2 - 4ph + 2h^2 tan(b)^2\right]$$
$$= mh^2\left[3\left(\frac{p}{h}\right)^2 + 2(1 + tan(b)^2) - 4\left(\frac{p}{h}\right)\right]$$

Bei gegebenen b befindet sich das p mit dem geringsten Trägheitsmoments am Massenschwerpunkt, also im Falle des Dreiecks bei p/h=2/3.

Dort wo das Verhältnis von Drehmoment zu Trägheitsmoment besonders gross ist, ist auch die von Drehmoment erzeugte Beschleunigung besonders gross und somit die Selbstausrichtung besonders zügig.

Nur der Term des Drehmomentes der die Abschattung beschreibt, hängt von der Geometrie des Dreiecks ab. Daher betrachten wird hier nur diesen Term:

$$F\,h\,sin(a)\left(\frac{S_3(a)}{\pi r_2^2}\left(\frac{tan(b)}{tan(a)} - 1 + \frac{p}{h}\right) + \frac{S_1(a)}{\pi r_2^2}\frac{p}{h}\right)$$

wobei $d(a) = h\,||tan(a)| - tan(b)|$ und $\frac{S(a)}{\pi r^2} = \frac{2}{\pi}\left[arccos\left(\frac{d(a)}{2r}\right) - \frac{d(a)}{2r}\sqrt{1 - \left(\frac{d(a)}{2r}\right)^2}\right]$

und

$$\frac{S_3(a)}{\pi r^2} = \begin{cases} \frac{S(a)}{\pi r^2} & \text{für } arctan\left(tan(b) - \frac{2r}{h}\right) \le a \le arctan\left(tan(b) + \frac{2r}{h}\right) \\ 0 \text{ sonst} \end{cases}$$

$$\frac{S_1(a)}{\pi r^2} = \begin{cases} \frac{S(a)}{\pi r^2} & \text{für } 180° - arctan\left(tan(b) + \frac{2r}{h}\right) \le a \le 180° - arctan\left(tan(b) - \frac{2r}{h}\right) \\ 0 & \text{sonst} \end{cases}$$

Es interessiert hier nur Bereich in dem 0°<a<90° ist. S1 (a) ist dort immer Null.

Das Trägheitsmoment ist, wie bereits oben erläutert, in diesem Fall:

$$I = mh^2\left[3\left(\frac{p}{h}\right)^2 + 2(1 + \tan(b)^2) - 4\left(\frac{p}{h}\right)\right]$$

Die Drehachse soll für diese Betrachtung bei p/h=2/3 liegen, also auf dem Massenschwerpunkt. Wir betrachten also die Situation mit dem kleinsten Trägheitsmoment.

Mit diesen Annahmen ist das Verhältnis des Drehmomentterms $M_z^*$ zum Trägheitsmoment I im Bereich von

$$arctan\left(tan(b) - \frac{2r}{h}\right) \le a \le arctan\left(tan(b) + \frac{2r}{h}\right)$$ folgendes:

$$\frac{M_z^*}{I} = \frac{2Fhsin(a)}{3\pi mh^2} \frac{\left(arccos\left(\frac{d}{2r}\right) - \frac{d}{2r}\sqrt{1 - \left(\frac{d}{2r}\right)^2}\right)\left(\frac{\tan(b)}{\tan(a)} - 1 + \frac{2}{3}\right)}{\frac{4}{3} + 2(1 + \tan(b)^2) - \frac{8}{3}}$$

$$3\pi mh\frac{M_z^*}{FI} = sin(a)\frac{\left(arccos\left(\frac{d}{2r}\right) - \frac{d}{2r}\sqrt{1 - \left(\frac{d}{2r}\right)^2}\right)\left(\frac{\tan(b)}{\tan(a)} - \frac{1}{3}\right)}{\frac{1}{3} + \tan(b)^2}$$

Weiter nehmen wir an, dass der Rotordurchmesser so gewählt ist, dass die Rotorl<reise in der Projekton auf eine der Repellerebene sich gerade berühren, aber nicht schneiden. Das heisst, dass h tan(b) = 2r. Mit dieser Annahme ergibt sich aus der Definition von $d(a) = h\,||tan(a)| - tan(b)|$, dass $\frac{d}{2r} = \left|\frac{\tan(a)}{\tan(b)} - 1\right|$. für 0°<a<90°. $3\pi mh\frac{M_z^*}{FI}$ lässt sich also als Funktion von der Windrichtung a und dem halben Öffnungswinkel b darstellen und entsprechend optimieren.

Die Ergebnisse zeigt die folgende Tabelle:

| Windrichtung a | Der halbe Öffnungswinkel, b, der bei dieser Windrichtung am stärksten reagierenden Repelleranordnung; | Maximum von $3\pi mh\frac{M_z^*}{F}\frac{1}{I}$ bei dem gegebenen a: |
|---|---|---|
| 5° | 5.96° | 0.27 |
| 10° | 10.41° | 0.50 |
| 15° | 15° | 0.67 |
| 20° | 20° | 0.77 |
| 25.5° | 25.5° | 0.80 |
| 30° | 30° | 0.79 |
| 35° | 35° | 0.73 |
| 40° | 40° | 0.65 |
| 47.8° | 47.8° | 0.50 |
| 50° | 50° | 0.46 |
| 60° | 60° | 0.27 |

(fortgesetzt)

| Windrichtung a | Der halbe Öffnungswinkel, b, der bei dieser Windrichtung am stärksten reagierenden Repelleranordnung; | Maximum von $3\pi m h \frac{M_{\bar{z}}^{*}}{F l}$ bei dem gegebenen a: |
|---|---|---|
| 70° | 70° | 0.13 |
| 80° | 80° | 0.03 |

Repelleranordnungen, der Art "Dreieck mit Spitze im Wind", die stark auf Abweichungen reagieren, habe also Öffnungswinkel zwischen etwa 10° und etwa 50°, und insbesondere einen Öffnungswinkel von ca. 25°. Für eine starke Reaktion sollte in etwa das Maximum von $3\pi m h \frac{M_{\bar{z}}^{*}}{F l} \geq 0.5$ sein.

Um die stärkste Reaktion auf eine bestimmte Windrichtung zu haben, sollte der halbe Öffnungswinkel grösser sein als diese Windrichtung und bevorzugt gerade gleich dieser Windrichtung.

In einer Ausführungsform umfasst die selbstausrichtende Windturbinenanlage Solarpaneele die zumindest einen Teil der Anordnungsfläche bedecken. Bevorzugt bedecken die Solarpaneele einen Anteil von mehr als 80% der Anordnungsfläche. Bevorzugt sind die Solarpaneele oberhalb der Mittelpunkte der Repeller der Repelleranordnung und oberhalb von Verbindungselementen der Repeller der Repelleranordnung montiert. Bevorzugt sind die Solarpaneele in einem Bereich zwischen der Anordnungsebene und einer Parallelebene im Abstand vom grössten vorkommenden Radius eines Repellers der Repelleranordnung darüber montiert.

"Oben" und "unten" sollen hier durch die Lotrichtung bestimmt sein und an der Windturbinenanlage im montierten Zustand festgestellt werden. Ein Lot, welches an der Windturbinenanlage im Betriebszustand befestigt ist, zeigt nach unten. Die Gegenrichtung zu "unten" ist "oben".

Die Bedeckung der Anordnungsfläche mit Solarpaneelen erlaubt eine Stromproduktion in Zeiten mit wenig Wind aber Sonneneinstrahlung. Insbesondere in Verbindung mit langsam drehenden Repellern kann diese Kombination eingesetzt werden: Langsam drehende Repeller versetzen auch die sie durchströmende Luft nur in eine geringe Drehung. Die Vertikalkomponente der Luftbewegung ist also vergleichsweise klein. Hindernisse wie beispielsweise Solarpaneele, bremsen die Vertikalbewegung der Luftströmung. Ist die Vertikalbewegung klein, so ist auch der Energieverlust klein. Die Anlage kann daher trotz der Solarpaneele effizient betrieben werden.

Je nach lokalen Windverhältnissen, können die Solarpaneele auch bei schneller laufenden Repellern vorteilhaft sein. So können derartige Hindernisse die Windströmung langsamer und gleichmässiger machen, da der Windwiderstand mit dem Quadrat der Strömungsgeschwindigkeit ansteigt. Auch in Bereichen wo mit Windströmungen mit starken Vertikalkomponenten gerechnet werden muss, können Solarpaneele auf einfache und kostengünstige Art den Wind direkter auf die Repeller leiten.

Wie stark die Solarpaneele die Repeller überhaupt beeinflussen hängt natürlich auch von der genauen Anordnung ab: Bei einer Anordnung von drei Repellern im gleichschenkligen Dreieck mit einem grossen Öffnungswinkel bei welchem der grosse Öffnungswinkel vorne liegt, strömt nur ein kleiner Bruchteil des Windes eine lange Strecke über die Solarpaneele bevor er auf einen Repeller trifft. Der Einfluss ist entsprechend gering.

Die Montage der Solarzellen oberhalb der Verbindungselemente hat den Vorteil, dass es keine Abschattung durch die Verbindungselement gibt.

Eine Montage der Solarzellen zwischen den Verbindungselementen ist technisch aufwendiger, da entweder die Form der Solarzellen angepasst werden muss oder auf potentiell belegbare Fläche verzichtet werden muss. Dafür ist die senkrecht zu den Repellerebenen gemessene Dicke der Strömungshindernisse kleiner. Die Solarzellen können sogar dazu eingesetzt werden die Verbindungselemente derart zu verkleiden oder zu ergänzen, dass eine strömungstechnisch optimierte Form entsteht: Es kann sich beispielsweise um eine besonders strömungswiderstandsarme Form handeln oder um eine Art Spoiler, der Abtrieb erzeugt um ein "Aufkippen" der Anlange während der Selbstausrichtung zu verhindern oder zu vermindern.

Eine Montage der Solarzellen oberhalb der Anordnungsfläche reduziert die Verschattung der Solarzellen durch die Repeller und kann ausserdem die Aufmerksamkeit von Vögeln auf die Ausdehnung der Repeller lenken. Ausserdem können so die Repellerachsen vor Umwelteinflüssen etwas geschützt. Die Wartung vereinfacht sich, da die Bauweise weniger kompakt ist. Schliesslich ist auch der Teil der Repellerfläche, der von durch die Solarpaneele beeinflussten Wind angeströmt wird kleiner als bei einer mittigen Anordnung der Paneele.

In einer Ausführungsform einer selbstausrichtenden Windturbinenanlage sind die Repeller der Repelleranordnung, bevorzugt alle Repeller der Windturbinenanlage, Langsamläufer. Ihre Schnelllaufzahl $\lambda = 2\pi n R / v1$ ist weniger oder gleich 6, bevorzugt in etwa 3. Dabei ist n die Anzahl Umdrehungen pro Zeiteinheit, R der Repellerradius und v1 die ungestörte Windgeschwindigkeit.

Die Flügelspitzengeschwindigl<eit von Langsamläufern ist geringer als von einem Schnellläufer. Die geringere Flügelspitzengeschwindigl<eit führt zu weniger Lärm und zu einer verbesserten Sichtbarkeit der Flügel.

In einer Ausführungsform weist jeder der Repeller der selbstausrichtenden Windturbinenanlage sechs Flügel auf.

Es wurde festgestellt, dass sich effiziente und geeignete Repeller mit sechs Flügeln konstruieren lassen. Insbesondere lassen sich so Langsamläufer bauen, die nur wenig Lärm machen.

In anderen Ausführungsformen weist jeder der Repeller der Windturbinenanlage fünf, vier oder drei Flügel auf. Mit abnehmender Anzahl Flügel nimmt die Schnelllaufzahl tendenziell zu. Gleichzeitig nehmen Gesamtgewicht und Materialaufwand für den Repeller mit abnehmender Anzahl Flügel ab.

In einer weiteren Ausführungsform werden Repeller unterschiedlicher Bauart in der Repelleranordnung kombiniert. So kann jeder Repeller optimal auf seine direkte Umgebung abgestimmt werden: Repeller in der vordersten Repellerebene werden beispielsweise von weitgehend ungestörter Luft angeströmt, während Repeller in den hinteren Repellerebenen toleranter gegenüber Turbulenzen sein sollten und je nach Lage auch von Wind mit geringerer Geschwindigkeit angeströmt werden.

Um die Belastungen auf die Lager zu verringern, ist in einer Ausführungsform die Laufrichtung der Repeller anders als die Laufrichtung ihrer symmetrischen Gegenstücke. Das symmetrische Gegenstück eines Repellers mit Mittelpunktskoordinaten (x,y) ist ein Repeller mit Mittelpunktskoordinaten (x,-y). Dabei ist das Koordinatensystem so gewählt, dass die Anordnungsfläche in der x-y-Ebene und die Symmetrieachse auf der x-Achse liegt.

In einer Ausführungsform haben alle Repeller der Repelleranordnung, insbesondere alle Repeller der Windturbinenanlagen, Radien zwischen 0.5 und 5 m. In einer bevorzugten Ausführungsform haben die Repeller der Repelleranordnung und insbesondere alle Repeller der Windturbinenanlage, einen Radius von 1.5 m.

Damit sich Repeller nicht gegenseitig beeinflussen gilt die Faustregel, dass nebeneinander stehende Repeller mindestens 3 Rotordurchmesser Abstand aufweisen sollten und hintereinander stehende Repeller mindestens 5 Rotordurchmesser.

Bei der Repelleranordnung ist die Beeinflussung des hinteren Rotors durch den vorderen erwünscht: Dieser Abstand sollte also für die Winkel a bei denen die Selbstausrichtung wirken soll, kleiner als 5 Rotordurchmesser sein. Bei a=0°, also in der optimalen Betriebsausrichtung, sollte es aber zu möglichst wenig Wechselwirkungen kommen. Repeller in derselben Repellerebene haben daher bevorzugt einen Abstand von mehr als 3 Repellerdurchmessern.

In einer Dreiecksanordnung mit drei Repellern mit Radius r könnte die Grundseite beispielsweise 6 Repellerradien lang sein.

Die hinteren Repeller haben daher die Mittelpunktskoordinaten (x, -3r) und (x, 3r) und der vordere Repeller liegt bei (0,0). Der halbe Öffnungswinkel des Dreiecks ist tan(b)=3r/x und somit ist x=3r/tan(b). Der Verschattungseffel<t ist positiv für Winkel $a_{min} < a < b$ und negativ für Winkel $b < a < a_{max}$ mit $\tan(a_{min}) = \frac{r}{x} = \frac{1}{3}\tan(b)$ und

$\tan(a_{max}) = \frac{5r}{x} = \frac{5}{3}\tan(b)$. Die Distanz zwischen den sich überlappenden Stellen ist $d(a) = \sqrt{\tan(a)^2\,x^2 + x^2} = 3r\sqrt{\left(\frac{\tan(a)}{\tan(b)}\right)^2 + \frac{1}{\tan(b)^2}}$, wobei $\frac{\tan(a)}{\tan(b)}$ zwischen 1/3 und 5/3 liegt.

Um eine grosse Wirkung im positiven Bereich und eine weniger starke Wirkung im negativen Bereich zu haben, sollte $d(a) < 5r$ für $\frac{1}{3} \le \frac{\tan(a)}{\tan(b)} < 1$ sein und $d(a) \ge 5r$ für $1 \le \frac{\tan(a)}{\tan(b)} \le \frac{5}{3}$ zwischen 1 und 5/3 sein.

Da d(a) offensichtlich monoton steigend ist mit zunehmenden $\frac{\tan(a)}{\tan(b)}$ kann diese Bedingung erfüllt werden, wenn $d(a) = 5r$ bei $\frac{\tan(a)}{\tan(b)} = 1$.

Also $5r = 3r\sqrt{1 + \frac{1}{\tan(b)^2}}$. Daraus folgt $\tan(b) = \frac{1}{\sqrt{\left(\frac{5}{3}\right)^2 - 1}} = \frac{3}{4}$ oder b=ca. 37° und x = $\frac{3r}{\tan(b)} = 4r$.

Das Dreieck hat also eine Höhe von 4r und eine Grundseite von 6r. Der halbe Öffnungswinkel ist arctan(3/4)= ca. 37°.

Für eine gute Flächennutzung kann die Drehachse im Uml<reismittelpunl<t der äussersten "Ecken" liegen. Diese Ecken sind durch die Repeller gegeben und liegen bei (0,-r), (0,r), (4r,-4r) und (4r,4r). Da es sich um ein symmetrisches Trapez handelt, liegt der Uml<reismittelpunl<t auf dem Schnittpunkt der Mittelsenkrechten. Dieser ist bei (3.875 r, 0) und damit hinter dem Belastungsschwerpunl<t (unter der Annahme, dass die Repeller alle gleich gross sind). Diese Drehachse kann daher nur dann gewählt werden, wenn die Betriebsrichtung so ist, dass die Grundseite vom Wind angeströmt wird. Der Radius des überstreichbaren Kreises ist dann $\sqrt{3.875^2 + 1^2}\, r = 4.002\, r$

Für einen möglichst gute Flächennutzung im Fall dass die Grundseite dem Wind abgeneigt ist in der Betriebsausrichtung, kann die Drehachte im Belastungsschwerpunl<t bei (2/3 x, 0)=(8/3r, 0)=(2.67r, 0) gesetzt werden. Der Radius des überstreichbaren Kreises ist dann

$$Max\left(\sqrt{\left(\tfrac{2}{3}x\right)^2 + r^2}, \sqrt{\left(\tfrac{x}{3}\right)^2 + (4r)^2}\right) = Max\left(r\sqrt{\tfrac{64}{9}+1}, r\sqrt{\tfrac{16}{9}+16}\right) \approx$$

$$Max(2.85\,r, 4.22\,r) = 4.22\,r.$$

Mit Repellerradien von 0.5m ergibt sich also eine handliche Anlange, die nur wenig mehr Platz benötigt als ein Kreis mit 4m Durchmesser.

Betrachtet man das Verhältnis der gesamten Rotorfläche zum Platzbedarf, so zeigt sich, dass die Nutzung grösserer Repeller günstiger ist. Bei sehr grossen Rotoren und entsprechend grossen Anlangen wird aber die Handhabung zunehmend schwieriger, so dass dem Rotordurchmesser Grenzen gesetzt sind.

Für einen stärkeren Verschattungseffel<t, kann der Winkel b grösser gewählt werden als im Beispiel oben. Die Position der Drehachse würde bei 2/3 x bleiben für eine Betriebsrichtung in der die Grundseite auf der windabgewandten Seite liegt. Für eine Betriebsausrichtung in der die Grundseite die windzugewandten Seite darstellt, könnte die Position der Drehachse bei 1/3 x oder etwas davor gewählt werden.

Nicht beansprucht ist folgendes Verfahren zur Konstruktion einer Windturbinenanlage umfassend die Wahl von den folgenden Parametern: Einer Anzahl Repellern und/oder Windhindernissen, die Radien der Repeller und/oder der Windhindernisse, die Verteilung der Repeller und/oder Windhindernisse in mindestens zwei Repellerebenen, die Winkeln zwischen Verbindungslinien von je zwei Repellern und/oder Windhindernisse unterschiedlicher Repellerebenen und einer Symmetrieachse einer Anordnung der Repeller, und dem der Durchstosspunkt der Drehachse auf der Symmetrieachse im Bereich vor dem Belastungsschwerpunl<t der Repelleranordnung.

All diese Parameter werden so gewählt, dass eine gewünschte Drehmomentfunl<tion resultiert.

Die Drehmomentfunl<tion beschreibt dabei das resultierende Drehmoment bezüglich des Durchstosspunl<tes der Drehachse in Abhängigkeit des Winkels des Windes zur Symmetrieachse der Repelleranordnung.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1        Eine Skizze zur Bestimmung der Repeller-I<enngrössen.

Fig. 2        Eine Skizze zur Erläuterung der verschiedenen Ebenen und Lagebeziehungen.

Fig. 3a-e        Verschiedene Beispiele von Repelleranordnungen.

Fig. 4        Eine Skizze zur Berechnung des Drehmoments.

Fig. 5a        Eine Skizze zur Erläuterung des Begriff "konvexe Hülle".

Fig.5b        Eine Skizze zur Erläuterung der Verschattungsfläche.

Fig. 6a,b        Eine Skizze zur Erläuterung der möglichen Abweichung der Anordnungsebene von der Senkrechten zu den Repellerebenen.

Fig. 7a,b        Skizzen zum Verschattungseffel<t für die Fälle "Dreieck im Wind" und "Dreieck gegen den Wind".

Fig.8a,b        Nutz- und Brauchfläche für die Fälle "Dreieck im Wind" und "Dreieck gegen den Wind".

Fig. 9a,b        Drehmomentfunl<tion für die Fälle "Dreieck im Wind" und Dreieck gegen den Wind".

Fig. 10          Beispiel für eine Windturbinenanordnung.

Fig. 11a,b       Ein Beispiel einer Windturbinenanordnung mit Solarpaneelen in der Ansicht von unten und von der Seite .

Grundsätzlich sind in den Figuren gleiche Teile mit gleichen Bezugszeichen versehen.

**Wege zur Ausführung der Erfindung**

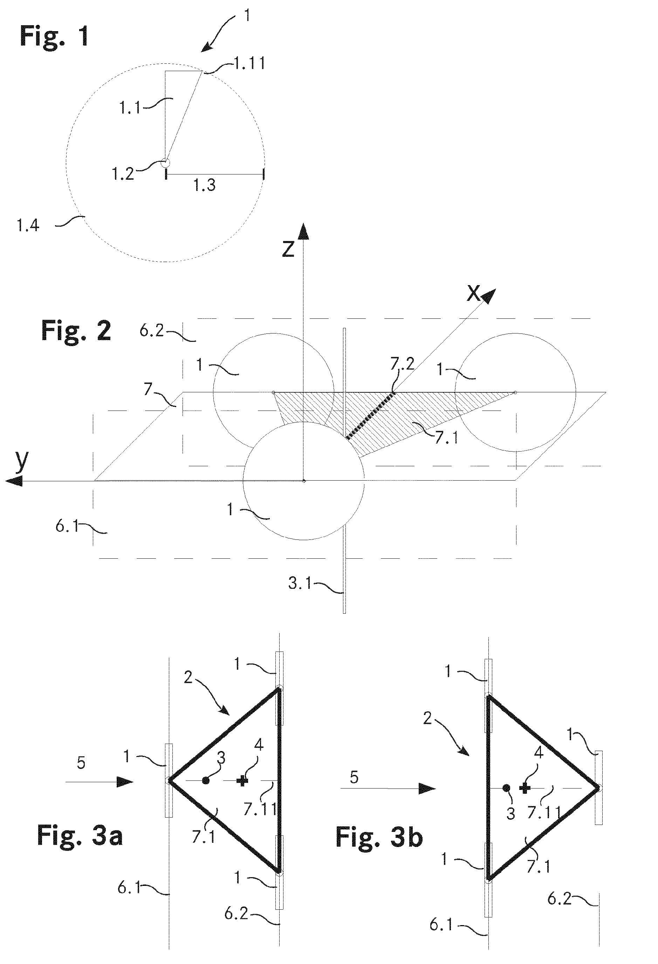

Figur 1 zeigt eine Skizze zur Bestimmung der Repeller-I<enngrössen: Der Repeller 1 umfasst einen Flügel 1.1 und eine Rotationsachse. Der Flügel 1.1 hat, in diesem Beispiel und in der hier gezeigten Projektion auf die Ebene senkrecht zur Rotationachse, die Form eines rechtwinkligen Dreiecks. Einer der spitzen Winkel dieses Dreiecks befindet sich am Mittelpunkt 1.2 des Repeller. Die Rotationsache durchstösst die Papierebene am Mittelpunkt 1.2. Die andere spitze Ecke des Dreiecks ist der äusserste Punkt 1.11 des Flügels 1.1. Der äusserste Punkt 1.11 beschreibt, bei Rotation um die Rotationsachse, einen Kreis, den Repellerl<reis 1.4. Der Repellerl<reis 1.4 hat einen Radius 1.3 der dem Abstand zwischen dem äussersten Punkt1.11 des Flügels 1.1 zum Mittelpunkt 1.2 entspricht.

Sollte ein Flügel 1.1 mehrere äusserste Punkte 1.1 1 aufweisen, so kann beispielsweise der am weitesten vorne liegende dieser mehreren Punkte genutzt werden. Der Mittelpunkt 1.2 kann stets als Durchstosspunkt der Rotationsachse durch den Repellerl<reis 1.4 definiert werden.

Figur 2 ist eine Skizze zur Erläuterung der verschiedenen Ebenen und Lagebeziehungen der Windturbinenanlage.

Die gezeigte Windturbinenanlage umfasst drei Repeller 1. Deren Mittelpunkte stellen die Ecken eines Dreiecks dar: Dieses Dreieck ist die Anordnungsfläche 7.1. Die Anordnungsfläche 7.1 liegt in der Anordnungsebene 7. Die Repeller 1 definieren jeweils Repellerl<reise 1.4, die wiederum in Repellerbenen 6.1 und 6.2 liegen. Im gezeigten Beispiel liegt ein Repeller 1 in einer vorderen Repellerebene 6.1 und zwei Repeller 1 in einer hinteren Repellerebene 6.2. Die Repellerebenen 6.1 und 6.2 liegen parallel zueinander. Die Lagebeziehung "vorne" und "hinten" ergibt sich auf der Betriebsrichtung. In dem gezeigten Beispiel soll der Wind in der Betriebsrichtung in die mit x bezeichnete Richtung wehen. Die Anordnungsfläche 7.1 weist eine Symmetrieachse 7.2 auf. Die mit x bezeichnete Richtung verläuft entlang der Symmetrieachse 7.2. Eine Drehachse 3.1 durchstösst die Anordnungsfläche 7.1 auf der Symmetrieachse 7.2. Die z-Richtung verläuft parallel zur Drehachse 3.1 und zeigt in die der Lotrichtung entgegengesetzte Richtung. Das genutzte Koordinatensystem soll rechtshändig sein und seinen Ursprung im Mittelpunkt 1.2 des Repellers 1 in der vorderen Repellerebene 6.1 haben.

Die Figuren 3a -e zeigen verschiedene Beispiele von Repelleranordnungen. Alle Anordnungen werden in der Ansicht auf die Anordnungsebene 7 gezeigt. Die Figuren 3a-e zeigen alle die Betriebsanordnung.

Figur 3a zeigt die Anordnung "Dreieck im Wind": Die Repelleranordnung 2 umfasst genau drei Repeller 1. Die Repellermittelpunl<te 1.2 sind in Form eines gleichschenkligen Dreiecks angeordnet. Die Ecke, deren Winkel von den beiden gleichlangen Schenkeln gebildet wird, zeigt in den Wind 5 in der Betriebsanordnung. Die Repeller 1 haben alle den gleichen Radius. Die Anordnungsfläche 7.1 ist ein gleichschenkliges Dreieck. Das Dreieck hat eine Symmetrieachse 7.11. Die Repeller 1 liegen in zwei Repellerebenen 6.1 und 6.2. Es gibt einen Repeller 1 in der vorderen Repellerebene 6.1 und zwei Repeller in der hinteren Repellerebene 6.2. Der Belastungsschwerpunl<t 4 liegt bei 2/3 der Höhe des Dreiecks, also der Länge der Symmetrieachse 7.11 und zwar von der Spitze, also dem Mittelpunkt des vorderen Repellers 1 aus gemessen. Der Durchstosspunkt 3 der Drehachse liegt ebenfalls auf der Symmetrieachse 7.11 und zwar vor dem Belastungsschwerpunl<t 4.

Figur 3b zeigt die Anordnung "Dreieck gegen den Wind": Die Repelleranordnung ähnelt der Anordnung "Dreieck im Wind" stark. Allerdings ist die Betriebsausrichtung um 180° gedreht: Der Wind 5 trifft nun zunächst auf die Grundseite des Dreiecks, also auf die vordere Repellerebene 6.1, die nun zwei Repellern 1 aufweist. Der Belastungsschwerpunl<t befindet sich nun bei 1/3 der Höhe des Dreiecks oder 1/3 der Länge der Symmetrieachse 7.11. Der Durchstosspunkt 3 der Drehachse liegt auf der Symmetrieachse 7.11 und vor dem Belastungsschwerpunl<t 4.

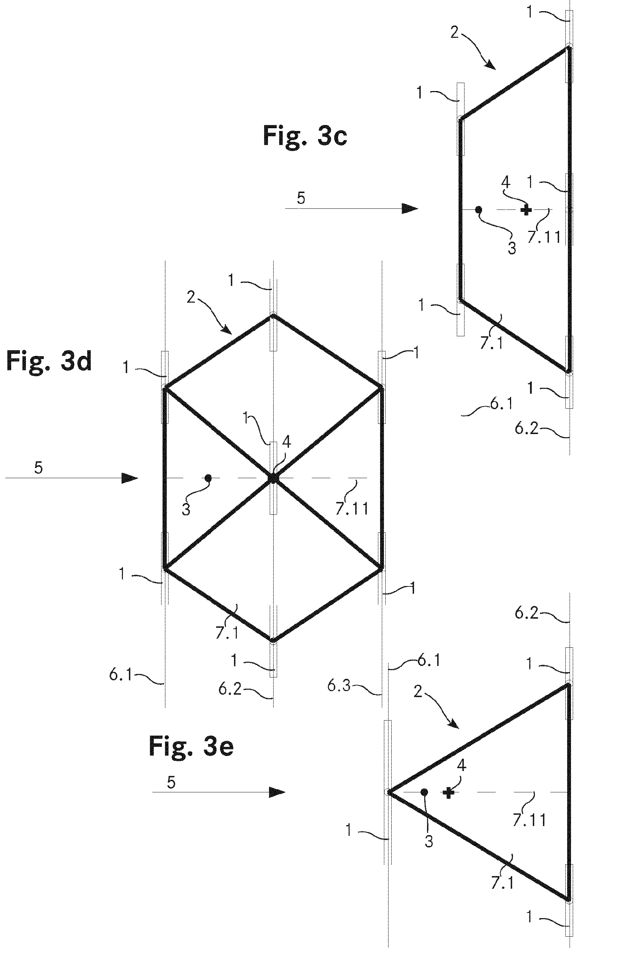

Figur 3c zeigt eine weitere Repelleranordnung 2. Die Anordnungsfläche 7.1 hat die Form eines symmetrischen Trapezes, wobei die kleinere der beiden parallelen Seiten zum Wind 5 hin gerichtet ist. In der vorderen Repellerebene 6.1 liegen zwei Repeller 1 und in der hinteren Repellerebene 6.2 liegen drei Repeller 1. Die Repeller 1 haben alle den gleichen Radius. Die Repeller 1 sind symmetrisch angeordnet. In der hinteren Repellerebene 6.2 liegt ein Repeller 1 mittig zwischen zwei weiteren Repellern 1. Die Symmetrieachse 7.11 verläuft parallel zu Windrichtung 5. Der Belas-

$$\frac{1}{5}(0 + 0 + X + \ X + X) = \frac{3}{5}X$$

tungsschwerpunl<t 4 liegt bei                                                    wenn X die Gesamtlänge der Symmetrieachse 7.11 bezeichnet. Der Durchstosspunkt 3 der Drehachse durch die Anordnungsfläche liegt vor dem Belastungsschwerpunl<t 4.

Figur 3d zeigt eine weitere Repelleranordnung 2. Die Anordnungsfläche 7.1 hat die Form eines Sechsecks. Die Repelleranordnung 2 umfasst insgesamt sieben Repeller 1. Die Repeller 1 sind auf insgesamt drei Repellerebenen 6.1, 6.2 und 6.3 angeordnet. Auf der vordersten Repellerebene 6.1 befinden sich zwei Repeller 1, auf der mittleren Repellerebene 6.2 befinden sich drei Repeller 1 und auf der hinteren Repellerebene 6.3 befinden sich wiederum zwei Repeller 1. Der Abstand zwischen der vorderen Repellerebene 6.1 und der mittleren Repellerebene 6.2 ist gleich dem Abstand zwischen der mittleren Repellerebene 6.2 und der hinteren Repellerebene 6.3. Die Anordnungsfläche 7.1 weist eine Symmetrieachse 7.11 auf, die parallel zur Windrichtung 5 verläuft. Eine weitere Symmetrieachse des Sechsecks verläuft in der mittleren Repellerebene 6.2. Dabei handelt es sich aber nicht um die erfindungsgemässe Symmetrieachse, durch welche die Drehachse stösst. Unter der Annahme, dass alle Repeller 1 den gleichen Radius haben, liegt der Belastungsschwerpunl<t 4 gerade am Mittelpunkt des mittleren Repellers 1 der mittleren Repellerebene 6.2. Der Durchstosspunkt 3 der Drehachse liegt vor dem Belastungsschwerpunl<t 4 und zwar auf der Symmetrieachse 7.11 zwischen der vorderen Repellerebene 6.1 und der mittleren Repellerebene 6.2.

Figur 3e zeigt eine Repelleranordnung 2 der Art "Dreieck im Wind". Sie umfasst drei Repeller 1, deren Anordnungsfläche 7.1 ein gleichschenkliges Dreieck darstellt, dessen Spitze in den Wind 5 zeigt. Die vordere Repellerebene 6.1 liegt parallel zur hinteren Repellerebene 6.2. Auf der vorderen Repellerebene 6.1 liegt ein Repeller 1, in der hinteren Repellerebene 6.2 liegen zwei Repeller 1. Die beiden Repeller 1 der hinteren Repellerebene 6.2 haben den gleichen Radius r2. Der Repeller 1 der vorderen Repellerebene 6.1 hat den Radius r1. Der Radius des Repellers 1 der vorderen Repellerebene 6.1 ist doppelt so gross wie der Radius eines der Repellers 1 der hinteren Repellerebene 6.2. Für die Berechnung des Belastungsschwerpunl<tes müssen also die Gewichtungsfaktoren betrachtet werden:

$$g_1 = \frac{3\, r_1{}^2}{r_1^2 + 2r_2{}^2} \text{ und } g_{2,3} = \frac{3\, r_2{}^2}{r_1^2 + 2r_2{}^2}.$$

Mit $r_1 = 2r_2$ ergibt sich dann $g_1 = \frac{12\, r_2{}^2}{4r_2^2 + 2r_2{}^2} = 2$ und $g_{2,3} = \frac{3\, r_2{}^2}{4r_2^2 + 2r_2{}^2} = \frac{1}{2}$

Der Belastungsschwerpunl<t 4 ist daher bei $\frac{1}{3}\left(2*0 + \frac{1}{2}X + \frac{1}{2}X\right) = \frac{1}{3}X$ , wobei von vorne her gemessen wird und X die Gesamtlänge der Symmetrieachse 7.11 ist.

Der Durchstosspunkt 3 der Drehachse liegt vor dem Belastungsschwerpunl<t 4.

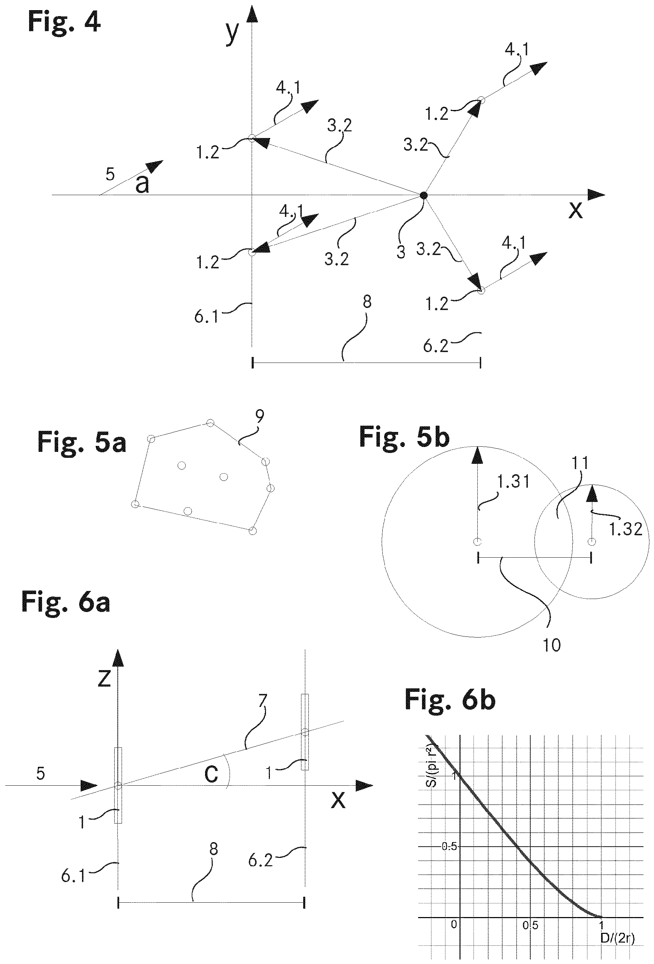

Figur 4 zeigt eine Skizze zur Berechnung des Drehmoments. Diese Skizze zeigt die x-y Ebene, wie sie in Figur 2 eingeführt wurde und insgesamt vier, symmetrisch um die x-Achse angeordnete Mittelpunkte 1.2. Die y-Achse liegt in der vorderen Repellerebene 6.1 und die x-Achse in der Anordnungsebene. Die vordere Repellerebene 6.1 und die hintere Repellerebene 6.2 haben einen Abstand 8 voneinander.

Durch den Wind 5, der in einem Winkel a zur Symmetrieachse und damit auch zur Betriebsausrichtung weht, wird eine Kraft 4.1 in der gleichen Richtung auf jeden der Repeller und damit auf jeden der Repellermittelpunl<te. Diese

$$\vec{F} = F\begin{pmatrix} \cos(a) \\ \sin(a) \\ 0 \end{pmatrix}$$

Kraft kann in ihre x- und y-Komponente aufgeteilt werden: .

Es gibt einen Vektor 3.2, der vom Durchstosspunkt 3 der Drehachse bis zu jedem der Mittelpunkte 1.2 ragt. Der Durchstosspunkt 3 liegt per Wahl des Koordinatensystems auf der x Achse und hat daher die Koordinaten (p,0,0).

Ein beliebiger Mittelpunkt mit Index i liegt in der x-y-Ebene und hat daher die Koordinaten (xi,yi,0).

Der Vektor 3.2 vom Durchstosspunkt 3 zum Mittelpunkt 1.2 mit Index i ist also: $\vec{r_i} =$

$$\begin{pmatrix} x_i \\ y_i \\ 0 \end{pmatrix} - \begin{pmatrix} p \\ 0 \\ 0 \end{pmatrix} = \begin{pmatrix} x_i - p \\ y_i \\ 0 \end{pmatrix}$$

Das Drehmoment verursacht durch die Kraft Fi (4.1) am Punkt i um die Drehachse, die beim Durchstosspunkt 3 durch die x-y Ebene sticht ist also :

$$\vec{M_i} = \vec{r_i} \times \vec{F_i} = F_i \begin{pmatrix} x_i - p \\ y_i \\ 0 \end{pmatrix} \times \begin{pmatrix} \cos(a) \\ \sin(a) \\ 0 \end{pmatrix} = F_i \begin{pmatrix} y_i * 0 - \sin(a) * 0 \\ (x_i - p) * 0 - \cos(a) * 0 \\ (x_i - p)\sin(a) - y_i\cos(a) \end{pmatrix}$$

Wie erwartet, hat ist also nur die z-Komponente von M ungleich 0:

$$M_{z,i} = F_i\big((\mathrm{x}_i - p)\sin(a) - y_i\cos(a)\big)$$

Für alle Punkte N gemeinsam summieren sich die Drehmomente auf:

$$M_z = \sum_{i=1}^{N} F_i\big((\mathrm{x}_i - p)\sin(a) - y_i\cos(a)\big)$$

Auf Grund der Symmetrie muss es Paare i,j geben, bei denen $F_i\begin{pmatrix} x_i \\ y_i \\ 0 \end{pmatrix} = F_j\begin{pmatrix} x_j \\ -y_j \\ 0 \end{pmatrix}$ ist oder $y_i = 0$. Daher ergibt sich $M_z = \sum_{i=1}^{N} F_i \sin(a)(\mathrm{x}_i - p) = \sin(a)\sum_{i=1}^{N} F_i(\mathrm{x}_i - p)$

Um eine Drehung zu erzeugen, die dazu führt, dass die Symmetrieachse der Anordnung den Winkel a mit der x-Achse einschliesst, soll Mz positiv sein.

Das ist der Fall, wenn $\sum_{i=1}^{N} F_i(\mathrm{x}_i - p) > 0$ ist. Die Bedingung lässt sich umformulieren zu $\sum_{i=1}^{N} F_i x_i - \mathrm{p}\sum_{i=1}^{N} F_i > 0$ oder $\frac{\sum_{i=1}^{N} F_i x_i}{\sum_{i=1}^{N} F_i} > \mathrm{p}$ . Der Ausdruck auf der linken Seite ist nun gerade der Belastungsschwerpunl<t.

Daher entsteht eine gewisse Selbstausrichtung immer dann wenn a) die Symmetrieforderung ($(F_i\begin{pmatrix} x_i \\ y_i \\ 0 \end{pmatrix} = F_j\begin{pmatrix} x_j \\ -y_j \\ 0 \end{pmatrix}$ oder $y_i = 0$) erfüllt ist und b) der Durchstosspunkt 3 der Drehachse vor dem Belastungsschwerpunl<t liegt.

Figur 5a soll den Begriff der konvexen Hülle 9 aufzeigen: Es ist eine Menge von Punkten gezeigt. Die konvexe Hülle 9 im Sinne dieses Dokuments ist die gezeigte Linie. Die von der Linie umschlossene Fläche ist diejenige Fläche, in der alle Punkte liegen und alle Verbindungslinien dieser Punkte. Gleichzeitig ist die Fläche aber auch nicht grösser als nötig um eben gerade diese Bedingungen zu erfüllen.

Während einzelne Punkte auf der konvexen Hülle liegen, tun viele andere das nicht: Diese liegen in der von der konvexen Hüllen umschlossenen Fläche.

Figur 5b illustriert das Überlappen zweier Kreise: Beide Kreise haben einen Mittelpunkt 1.2 und einen Radius 1.3. Der grössere Kreis hat eine grösseren Radius 1.31 (r1) und der kleinere Kreis einen kleineren Radius 1.32 (r2). Ist der Abstand 10 (D) zwischen den Mittelpunkten grösser als die Summe der beiden Radien, so gibt es keine Überlappung und die Überlappungsfläche 11 (S) ist Null.

D.h.: Wenn $D \geq r_1 + r_2$ dann S=0

Ist der Abstand zwischen den Mittelpunkten 10 (D) kleiner als die Differenz der beiden Radien 1.31 (r1) und 1.32 (r2), dann liegt der kleinere Kreis vollständig im grösseren und die Überlappungsfläche 11 ist gleich des kleineren Kreises:

$$S = \pi\, \mathrm{r}_2^2$$

D.h.: Wenn $D \leq r_1 - r_2$ dann

Ist der Abstand zwischen den Mittelpunkten 10 (D) zwar grösser als die Differenz der Radien aber kleiner als deren Summe, so überlappen sich die Kreise nur teilweise.

Das Dreieck, welches durch die beiden Mittelpunkte und den Schnittpunkt der Kreise aufgespannt wird, hat die Seitenlängen D, r1 und r2. Die Winkel bei den beiden Mittelpunkten lassen sich daher mit dem Kosinussatz berechnen:

$$\cos(\beta_1) = \frac{D^2 + r_1^2 - r_2^2}{2Dr_1} \text{ und } \cos(\beta_2) = \frac{D^2 + r_2^2 - r_1^2}{2Dr_2}$$

Die Kreissektoren haben also jeweils eine Fläche von

$$A_{S1} = r_1^2 \arccos\left(\frac{D^2+r_1^2-r_2^2}{2Dr_1}\right) \text{ und } A_{S2} = r_2^2 \arccos\left(\frac{D^2+r_2^2-r_1^2}{2Dr_2}\right)$$

Von dieser Fläche ist nun aber noch die Fläche der Dreiecke abzuziehen, die durch jeweils einen Mittelpunkt und die beiden Schnittpunkte der Kreise aufgespannt werden. Es handelt sich um gleichschenklige Dreiecke mit einem halben Öffnungswinkel von β1 bzw. β2 und einer Schenkellänge von r1 bzw. r2. Da die halbe Grundseite dieser Dreiecks gerade *r sin(β)* und die Höhe gerade *r cos(β)* ist und $\sin(\beta) = \sqrt{1-\cos(\beta)^2}$ folgt:

$$A_{D1} = r_1^2 \cos(\beta_1)\sqrt{1-\cos(\beta_1)^2} = r_1^2 \frac{D^2+r_1^2-r_2^2}{2Dr_1}\sqrt{1-\left(\frac{D^2+r_1^2-r_2^2}{2Dr_1}\right)^2}$$

$$= \frac{D^2+r_1^2-r_2^2}{2D}\sqrt{r_1^2-\left(\frac{D^2+r_1^2-r_2^2}{2D}\right)^2}$$

und

$$A_{D2} = \frac{D^2+r_2^2-r_1^2}{2D}\sqrt{r_2^2-\left(\frac{D^2+r_2^2-r_1^2}{2D}\right)^2}$$

Insgesamt ist die Überlappungsfläche also

$$S = A_{S1} + A_{S2} - A_{D1} - A_{D2}$$

D.h.: Wenn $r_1 - r_2 < D < r_1 + r_2$ dann $S = A_{S1} + A_{S2} - A_{D1} - A_{D2}$

Figur 6a zeigt eine Skizze zur Erläuterung der möglichen Abweichung der Anordnungsebene von der Senkrechten zu den Repellerebenen.

Die Anordnungsebene 7 soll im Wesentlichen senkrecht zur Repellerebene stehen. Steht sie nicht genau senkrecht, so soll der Koordinatensystem bevorzugt an der Repellerebene festgemacht werden und nicht an der Anordnungsebene: Im Zweifelsfall ist die x-Achse also senkrecht auf der Repellerebene, auch wenn die Anordnungsebene 7 davon leicht abweicht.

Die Anordnungsebene soll derart ausgerichtet sein, dass es immer noch zu einem Abschattungseffekt kommt. D.h. bei Wind parallel zur x-y Ebene soll ein vorderer Repeller oder ein vorderes Windhindernis einen hinteren Repeller oder ein hinterliegendes Windhindernis abschatten können.

Figur 6a zeigt eine solche Anordnung: Gezeigt ist die Projektion der Repelleranordnung auf die x-z Ebene. Man blickt auf die Kanten der Anordnungsebene 7 und die Repellerebenen 6.1 und 6.2, so dass diese hier als blosse Striche erscheinen. Die Anordnungsebene 7 weicht um den Winkel c von der Senkrechten auf die Repellerebenen 6.1 und 6.2 ab. Der Abstand 8 der Repellerebenen 6.1 und 6.2 voneinander ist ebenfalls gezeigt.

Damit es nun überhaupt zu einem Abschattungseffekt kommen kann, müssen die Radien der Repeller in der vorderen und in der hinteren Repellerebene 6.1 und 6.2 sowie der Abstand 8 (h) der Repellerebenen folgenden Zusammenhang erfüllen:

$$\tan(c) < \frac{r_1 + r_2}{h}$$

Damit es zu eine signifikanten Überlappung kommt, sollte c aber sehr klein sein, denn der kleinstmögliche Abstand der Mittelpunkte ist $D_{min}$ = tan(c) h.

Zur Illustration nehmen wir an, dass die Radien der Repeller gleich gross sind. Damit ergibt sich die Überlap-

pungsfläche:

$$S = 2(A_{S1} - A_{D1}) = 2\left( r^2 \arccos\left(\frac{D}{2r}\right) - \frac{D}{2}\sqrt{r^2 - \frac{D^2}{4}}\right)$$

und in Einheiten der Kreisfläche:

$$\frac{S}{\pi r^2} = \frac{2}{\pi}\left( \arccos\left(\frac{D}{2r}\right) - \frac{D}{2r}\sqrt{1 - \left(\frac{D}{2r}\right)^2}\right)$$

Da D in der vorliegenden Situation nicht kleiner werden kann als $D_{min} = \tan(c)\,h$ ist die grösste erreichbare Abschattung:

$$\frac{S_{max}}{\pi r^2} = \frac{2}{\pi}\left( \arccos\left(\frac{h}{2r}\tan(c)\right) - \frac{h}{2r}\tan(c)\sqrt{1 - \left(\frac{h}{2r}\tan(c)\right)^2}\right)$$

Damit mindestens 90% verdeckt werden können, muss $\frac{h}{2r}\tan(c) \leq 0.08$ sein;

Damit mindestens 80% verdeckt werden können, muss $\frac{h}{2r}\tan(c) \leq 0.16$ sein.

Für eine Verdeckung von mehr als 50%, muss $\frac{h}{2r}\tan(c) \leq 0.40$ sein.

Figur 6b zeigt $\frac{S}{\pi r^2} = \frac{2}{\pi}\left( \arccos\left(\frac{D}{2r}\right) - \frac{D}{2r}\sqrt{1 - \left(\frac{D}{2r}\right)^2}\right)$ als Funktion von D/(2r). D/(2r) kann zwischen 0 und 1 liegen. Neben der Anwendung zur Abschätzung der tolerierbaren Abweichung der Anordnungsebene von der Senkrechten zu Repellerebene, kommt dieser Ausdruck auch bei der Abschätzung des Abschattungseffekts zum Tragen. Es handelt sich bei $\frac{S}{\pi r^2}$ um die normierte Abschattung im Fall zweier gleich grosser Kreise.

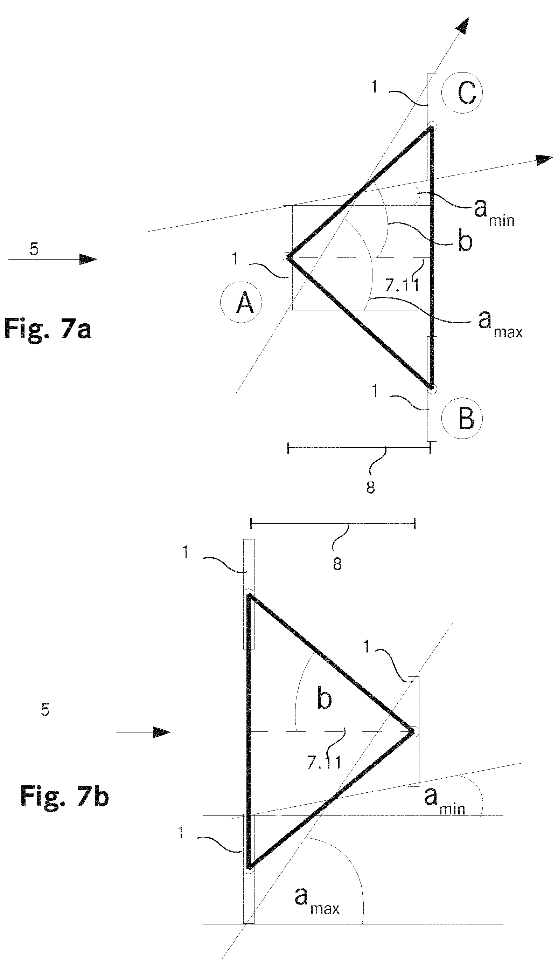

Figur 7a erläutert den Abschattungseffekt am Beispiel der Repelleranordnung "Dreieck im Wind".

Der Blick des Betrachters geht auf die x-y Ebene. Die Anordnungsfläche ist ein gleichschenkliges Dreieck mit einer Symmetrieachse 7.11. Die Windrichtung 5 in Betriebsausrichtung ist parallel zur Symmetrieachse 7.11. Das gleichschenklige Dreieck der Anordnungsfläche hat einen halben Öffnungswinkel b und einen Höhe h, die gleich dem Abstand der Repellerebenen 8 ist. Die Repeller haben einen Radius r. Wir nehmen hier an, dass die Radien aller Repeller 1 gleich sein.

Der Winkel zwischen Windrichtung und Symmetrieachse 7.11 soll nun zunehmen. Der Winkel zwischen Windrichtung und Symmetrieachse 7.11 wird mit a bezeichnet.

Bei einem Winkel $a_{minC}$ gerät Repeller C in den Windschatten von Repeller A. Bei einem Winkel $a_{maxC}$ ist Repeller C wieder aus dem Windschatten ausgetreten. Bei noch grösseren Winkeln gerät dann Repeller A in den Windschatten von Repeller B. Dies passiert zwischen den Winkeln $a_{minA}$ und $a_{maxA}$.

Die "Grenzwinkel" $a_{minC}$, $a_{maxC}$, $a_{minA}$, $a_{maxA}$ ergeben sich aus folgenden Überlegungen:

- Die halbe Grundseite des Dreiecks ist h*tan(b). Da die Repeller jeweils einen Radius von r haben sollen, ist der Abstand zwischen zwei Repellerkanten in y-Richtung h tan(b)-2r. In x-Richtung ist der Abstand der Repellerkanten gerade h. Also ist $\tan(a_{minC}) = \frac{h\tan(b)-2r}{h}$

- Die äusseren Repellerkanten haben einen Abstand in y-Richtung von h tan(b)+2r. Der Abstand in x- Richtung ist wiederum h. Also ist $\tan(a_{maxC}) = \frac{h\tan(b)+2r}{h}$

- Analog ergibt sich $a_{minA} = 180° - a_{maxC}$ und $a_{maxA} = 180° - a_{minC}$

Ersetzt man h = 2rycot(b) so ergeben sich die Winkel: $\tan(a_{minC}) = \frac{y-1}{y}\tan(b)$ und

$\tan(a_{maxC}) = \frac{y+1}{y}\tan(b)$ und $a_{minA} = 180° - \alpha_{maxC}$ und $a_{maxA} = 180° - a_{minC}$

Figur 7b zeigt die gleiche Situation für die Anordnung "Dreieck gegen den Wind": Aus der Skizze zeigt sich klar, dass es bei den gleichen Winkeln zu Abschattungen kommt wie in der Anordnung "Dreieck im Wind".

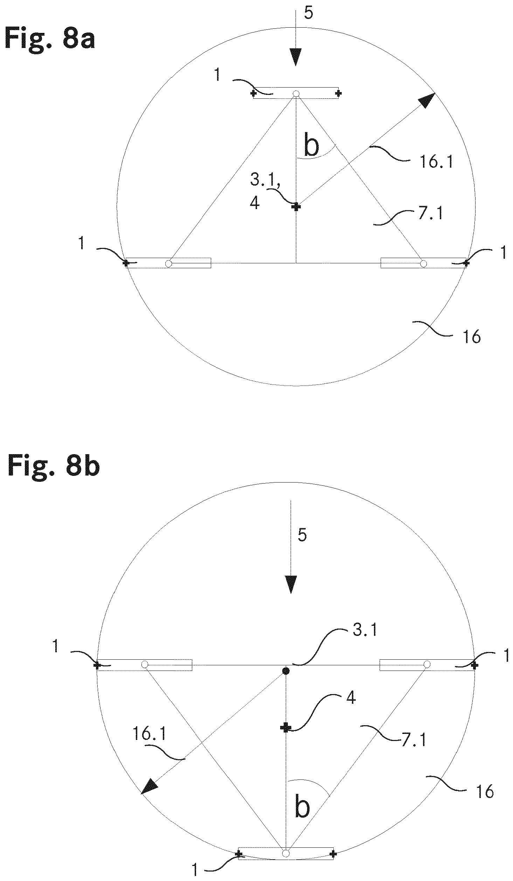

Figur 8a zeigt die Aufsicht auf die Anordnungsfläche 7.1 einer Repelleranordnung mit 3 Repellern 1 in der I<onstellation "Dreieck im Wind": Die Windrichtung 5 ist in Betriebsausrichtung ist. Der Durchstosspunkt der Drehachse 3.1 ist gleich dem Belastungsschwerpunl<t 4. Die Anordnungsfläche 7.1 hat die Form eines gleichschenkligen Dreiecks mit einem halben Öffnungswinkel b. Die Fläche 16 die von der Repelleranordnung gebraucht wird ist ein Kreis mit dem Radius 16.1.

Figur 8b zeigt dieselbe Ansicht einer Repelleranordnung der I<onstellation "Dreieck gegen den Wind". Hier liegt nun der Durchstosspunkt der Drehachse 3.1 deutlich vor dem Belastungsschwerpunl<t 4, der bei 1/3 der Höhe des Dreiecks der Anordnungsfläche 7.1 liegt. Die Fläche 16, die von der Repelleranordnung gebraucht wird ist wiederum ein Kreis mit dem Radius 16.1.

In Einheiten der Repellerradien ausgedrückt, ist der Radius 16.1 der in Figur 8a gezeigten I<onstellation grösser als in der in Figur 8b gezeigten I<onstellation.

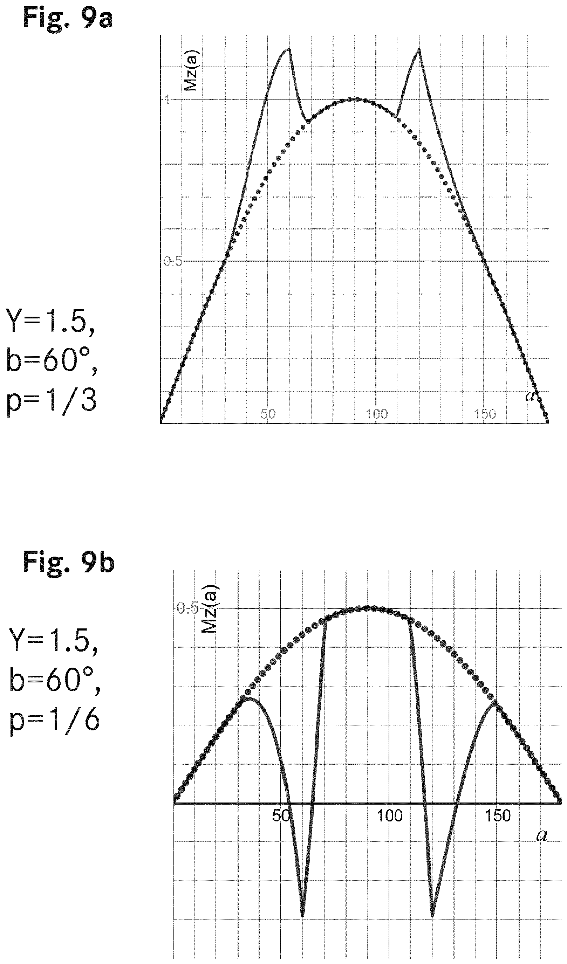

Figur 9 zeigt das Drehmoment in Abhängigkeit der Windrichtung a.

In der allgemeinsten Form ist das Gesamtdrehmoment folgendes:

$$M_z = \sum_{i=1}^{N} F_i \left( (x_i - p)\sin(a) - y_i \cos(a) \right) = \sin(a)\left[ \sum_{i=1}^{N} F_i x_i - p \sum_{i=1}^{N} F_i - \sum_{i=1}^{N} F_i y_i \cot(a) \right]$$

und mit $g_i = \frac{NF_i}{\sum_{i=1}^{N} F_i}$ und $\sum_{i=1}^{N} F_i = NF$ ergibt sich dann

$$M_z = NF\sin(a)\left[ \frac{1}{N}\sum_{i=1}^{N} g_i x_i - p - \frac{1}{N}\sum_{i=1}^{N} g_i y_i \cot(a) \right]$$

$$= NF\sin(a)\left[ x_g - p - \cot(a)\frac{1}{N}\sum_{i=1}^{N} g_i y_i \right]$$

Auf Grund der Symmetrie wird die Summe über die yi =0 und es folgt der für den Nichtverschatteten Fall bekannte Ausdruck:

$$M_z = NF\sin(a)\left[ x_g - p \right]$$

Die Kraft $F_i$ ist proportional zur Fläche. Bei einer Verschattung fällt die Kraft und entsprechend der Beitrag zum Drehmoment weg. Wenn also $\frac{S_i(a)}{\pi r^2}$ der verschattete Anteil der Fläche beim Angriffspunkt (xi, yi) ist, so reduziert sich das Drehmoment um $F_i \frac{S_i(a)}{\pi r^2}\left( (x_i - p)\sin(a) - y_i\cos(a) \right) = F\sin(a) g_i \frac{S_i(a)}{\pi r^2}\left( (x_i - p) - y_i\cot(a) \right)$

Für das Drehmoment mit Verschattung ergibt sich so:

$$M_z = NF\sin(a)\left[x_g - p - \sum_{i=verschattete\ Repeller} \frac{g_i}{N}\frac{S_i(a)}{\pi r^2}\left((x_i - p) - y_i\cot(a)\right)\right]$$

Für den Fall "Dreieck im Wind" ergibt sich folgendes:
Die Repeller sind bei

$$(x_1, y_1) = (0,0), (x_2, y_2) = (h, -h\tan(b)), (x_3, y_3) = (h, h\tan(b))$$

$$g_1 = g_2 = g_3 = 1$$

$$N = 3$$

$$\frac{x_g}{h} = \frac{2}{3}$$

$$\frac{S}{\pi r^2} = \frac{2}{\pi}\left(\arccos\left(\frac{D}{2r}\right) - \frac{D}{2r}\sqrt{1 - \left(\frac{D}{2r}\right)^2}\right) \text{ mit } \frac{D}{2r} = \frac{h}{2r}||\tan(a)|-\tan(b)| = y\left|\left|\frac{\tan(a)}{\tan(b)}\right| - 1\right|$$

$$\frac{S_1}{\pi r^2} = \begin{cases} 0 & 0 \le a < 180° - \arctan\left(\tan(b)\frac{(y+1)}{y}\right) \\ \frac{S}{\pi r^2} & 180° - \arctan\left(\tan(b)\frac{(y+1)}{y}\right) \le a \le 180° - \arctan\left(\tan(b)\frac{(y-1)}{y}\right) \\ 0 & 180° - \arctan\left(\tan(b)\frac{(y-1)}{y}\right) < a \le 180° \end{cases}$$

$$\frac{S_2}{\pi r^2} = 0 \; f\ddot{u}r \; 0 \le a \le 180°$$

$$\frac{S_3}{\pi r^2} = \begin{cases} 0 & 0 \le a < \arctan\left(\tan(b)\frac{(y-1)}{y}\right) \\ \frac{S}{\pi r^2} & \arctan\left(\tan(b)\frac{(y-1)}{y}\right) \le a \le \arctan\left(\tan(b)\frac{(y+1)}{y}\right) \\ 0 & \arctan\left(\tan(b)\frac{(y+1)}{y}\right) < a \le 180° \end{cases}$$

mit $y = \frac{h\tan(b)}{2r}$

Mit p=1/3 h ergibt sich dann für das Drehmoment mit Abschattung folgendes:

$$M_z = NFh\sin(a)\left[\frac{x_g}{h} - \frac{p}{h} - \sum_{i=verschattete\ Repeller} \frac{g_i}{N}\frac{S_i(a)}{\pi r^2}\left(\left(\frac{x_i}{h} - \frac{p}{h}\right) - \frac{y_i}{h}\cot(a)\right)\right]$$

$$M_z = NFhsin(a)\left[\frac{1}{3} - \frac{1}{3}\frac{S_1(a)}{\pi r^2}\left(\left(0-\frac{1}{3}\right) - 0\cot(a)\right) - \frac{1}{3}\frac{S_3(a)}{\pi r^2}\left(\left(1-\frac{1}{3}\right) - \frac{\tan(b)}{\tan(a)}\right)\right]$$

$$= Fhsin(a)\left[1 + \frac{1}{3}\frac{S_1(a)}{\pi r^2} - \frac{S_3(a)}{\pi r^2}\left(\frac{2}{3} - \frac{\tan(b)}{\tan(a)}\right)\right]$$

Figur 9a zeigt dieses $M_z$ als Funktion von a mit F= 1, h=1, y=1.5, b=60° und p/h=1/3.

Für den Fall "Dreieck aus dem Wind" ergibt sich folgendes:

Die Repeller sind bei

$$(x_1, y_1) = (0, -h\,tan(b)), (x_2, y_2) = (h, 0), (x_3, y_3) = (0, h\,tan(b))$$

$$g_1 = g_2 = g_3 = 1$$

$$N = 3$$

$$\frac{x_g}{h} = \frac{1}{3}$$

$$\frac{S}{\pi r^2} = \frac{2}{\pi}\left(\arccos\left(\frac{D}{2r}\right) - \frac{D}{2r}\sqrt{1-\left(\frac{D}{2r}\right)^2}\right) \text{ mit } \frac{D}{2r} = \frac{h}{2r}||\tan(a)|-\tan(b)|=y\left|\left|\frac{\tan(a)}{\tan(b)}\right|-1\right|$$

$$\frac{S_1}{\pi r^2} = 0\ für\ 0 \le a \le 180°$$

$$\frac{S_2}{\pi r^2} = \begin{cases} 0 & 0 \le a < \arctan\left(\tan(b)\frac{(y-1)}{y}\right) \\ \frac{S}{\pi r^2} & \arctan\left(\tan(b)\frac{(y-1)}{y}\right) \le a \le \arctan\left(\tan(b)\frac{(y+1)}{y}\right) \\ 0 & \arctan\left(\tan(b)\frac{(y+1)}{y}\right) < a \le 180° \end{cases}$$

$$\frac{S_3}{\pi r^2} = \begin{cases} 0 & 0 \le a < 180° - \arctan\left(\tan(b)\frac{(y+1)}{y}\right) \\ \frac{S}{\pi r^2} & 180° - \arctan\left(\tan(b)\frac{(y+1)}{y}\right) \le a \le 180° - \arctan\left(\tan(b)\frac{(y-1)}{y}\right) \\ 0 & 180° - \arctan\left(\tan(b)\frac{(y-1)}{y}\right) < a \le 180° \end{cases}$$

mit $y = \frac{h\,tan(b)}{2r}$

Für das Drehmoment mit Abschattung ergibt sich folgendes:

$$M_z = NFh\sin(a)\left[\frac{x_g}{h} - \frac{p}{h} - \sum_{i=verschattete\ Repeller} \frac{g_i}{N}\frac{S_i(a)}{\pi r^2}\left(\left(\frac{x_i}{h} - \frac{p}{h}\right) - \frac{y_i}{h}\cot(a)\right)\right]$$

$$M_z = NFh\sin(a)\left[\left(\frac{1}{3} - \frac{p}{h}\right) - \frac{1}{3}\frac{S_2(a)}{\pi r^2}\left(\left(1 - \frac{p}{h}\right) - 0\cot(a)\right) - \frac{1}{3}\frac{S_3(a)}{\pi r^2}\left(\left(0 - \frac{p}{h}\right) - \frac{\tan(b)}{\tan(a)}\right)\right]$$

$$= Fh\sin(a)\left[3\left(\frac{1}{3} - \frac{p}{h}\right) - \frac{S_2(a)}{\pi r^2}\left(1 - \frac{p}{h}\right) + \frac{S_3(a)}{\pi r^2}\left(\frac{p}{h} + \frac{\tan(b)}{\tan(a)}\right)\right]$$

Figur 9b zeigt dieses $M_z$ als Funktion von a mit F=1, h= 1, y=1.5, und b=60° und p/h=1/6.

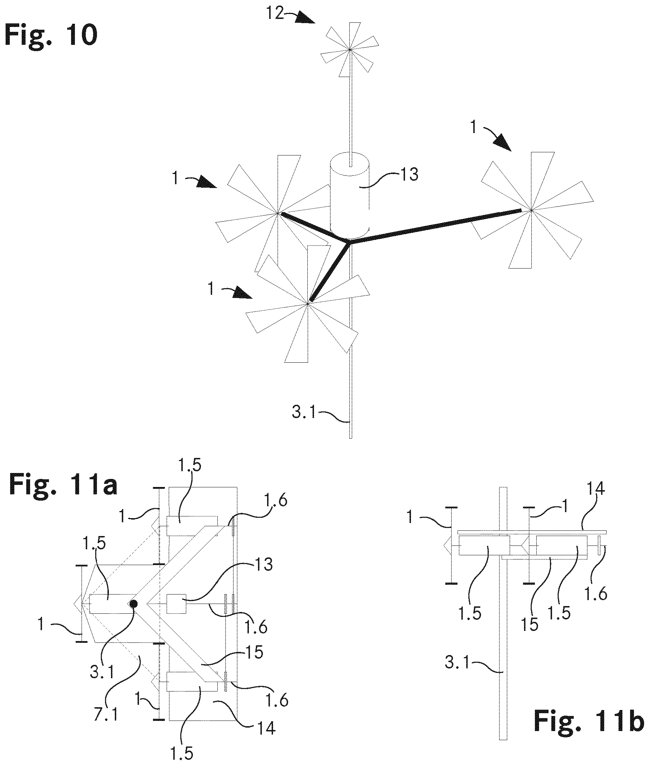

Figur 10 zeigt eine erste erfindungsgemässe Windturbinenanlage:
An einer gemeinsamen Drehachse 3.1 sind drei Repeller 1 mit je sechs Flügeln 1.1 zu einer Repelleranordnung 2 gekoppelt. Die Windturbinenanlage umfasst einen weiteren Repeller 12, der nicht zur Repelleranordnung 2 zählt. Ausserdem gibt eine Getriebe- und Generatoreinheit 13, die ebenfalls an die Drehachse 3.1 gekoppelt ist.

Figur 11 zeigt eine zweite Ausführungsform einer erfindungsgemässen Windturbinenanlage. Diese umfasst Solarpaneele 14.

Figur 11a zeigt die Anlange von unten. Figur 11b zeigt die Anlage von der Seite.

Die Windturbinenanlage umfasst 3 Repeller 1. Diese sind jeweils mit ihren Lagern 1.5 an einer Trägerstruktur 15 befestigt. Die Trägerstruktur hat die Form eines "v". Die von den Repellern 1 angetriebenen Achsen 1.6 ragen aus den Lagern 1.5 hinaus und sind untereinander durch Riemen gekoppelt. An der mittleren Achse 1.6 befindet sich eine Generatoreinheit 13. Die Mittelpunkte der Repeller bilden eine Anordnungsfläche 7.1. Diese hat die Form eines gleichschenkligen Dreiecks. Oberhalb der Trägerstruktur 15, der Lager 1.5 und der Achsen 1.6 befinden sich Solarpaneele 14. Die Solarpaneele 14 decken eine in etwa T-förmige Fläche ab. Die Drehachse 3.1 durchsticht die Trägerstruktur 15 und die Solarpaneele 14 im Bereich der Spitze des Vs. Die Anordnungsfläche 7.1 durchsticht die Drehachse 3.1 im Abstand von 2/3 der Höhe des Dreiecks, welches die Anordnungsfläche 7.1 darstellt.

Zusammenfassend ist festzustellen, dass Repeller der Ausführungsbeispiele auch durch geeignete Windhindernisse ersetzt werden können. Ausserdem können die Geometrien variiert werden: Viele Beispiele beziehen sich auf die Dreieckanordnung, können aber auch mit anders geformten Anordnungsflächen realisiert werden.

Auch kann eine erfindungsgemässe Windturbinenanlange noch mit weiteren, nicht der Repelleranordnung zugehörigen Repellern ausgestattet sein.

**Patentansprüche**

1. Selbstausrichtende Windturbinenanlage umfassend

   a) Eine Repelleranordnung (2) mit mindestens drei relativ zueinander starr angeordneten Windhindernissen, von denen mindestens zwei, insbesondere alle Windhindernisse Repeller (1) sind,

      (1) wobei jeder Repeller (1) mindestens einen Flügel (1.1) aufweist, der um eine Rotationsachse des jeweiligen Repellers (1) drehen kann, und wobei sich der Repeller (1) in seiner Betriebsausrichtung befindet, wenn er von vorne angeströmt wird, und wobei ein vorderster und am weitesten von der Rotationsachse entfernter Punkt (1.11) des genannten Flügels (1.1) bei einer Umdrehung um die Rotationsachse einen Kreis überstreicht, der einen Radius des Repellers (1.3) definiert, und wobei ein Mittelpunkt dieses Kreises auf der Rotationsachse liegt und einen Mittelpunkt des Repellers (1.2) definiert und wobei ein Repeller (1) ein Windhindernis ist, und

      (2) wobei ein Windhindernis, welches kein Repeller (1) ist, derart geformt und angeordnet ist, dass in einer Konfiguration in der der Wind die Repeller (1) von vorne anströmt seine dem Wind zugewandte Fläche rotationssymmetrisch ist und zwar um eine Rotationsachse des Windhindernisses die in Windrichtung verläuft und die das Windhindernis in einem Mittelpunkt des Windhindernisses durchstösst, und

      (3) wobei die Mittelpunkte (1.3) der mindestens drei Windhindernisse in mindestens zwei, parallel zueinander liegenden und voneinander beabstandeten Repellerebenen (6.1, 6.2, 6.3) angeordnet sind, wobei die Repellerebenen (6.1, 6.2, 6.3) senkrecht zu den Rotationsachsen der Windhindernisse, insbesondere der Repeller (1), stehen und alle Repeller (1) der Repelleranordnung (2) gleich ausgerichtet sind, und

      (4) wobei die Mittelpunkte der mindestens drei Windhindernisse in einer gemeinsamen Anordnungsebene (7) liegen und die Anordnungsebene (7) im Wesentlichen senkrecht zu den Repeller-Ebenen (6.1,6.2,6.3) steht und eine konvexe Hülle (9) aller Mittelpunkte aller Windhindernisse eine Anordnungsfläche (7.1) definiert und

(5) wobei die Anordnungsfläche (7.1) eine Symmetrieachse (7.11) aufweist, die im Wesentlichen parallel zu den Rotationsachsen verläuft, und

b) die Windturbinenanlage weiter eine Drehachse (3.1) umfasst, um welche die Repelleranordnung (2) drehbar ist und so die Selbstausrichtung ermöglicht wird, und

c) ein Durchstosspunkt der Drehachse (3.1) durch die Anordnungsfläche (7.1) auf der Symmetrieachse (7.11) und vor einem Belastungsschwerpunl<t (4), also einem mit dem jeweiligen Strömungswiderstand der Windhindernisse der Repelleranordnung (2) in der Betriebsausrichtung gewichteten Schwerpunkt, liegt

**dadurch gekennzeichnet, dass** mindestens zwei Repeller (1) der Repelleranordnung (2) aneinander drehzahlgel<oppelt sind und die drehzahlgel<oppelten Repeller (1) gemeinsam einen Generator (13) antreiben.

2. Selbstausrichtende Windturbinenanlage nach Anspruch 1, wobei der Abstand der Mittelpunkte (1.2) zweier beliebiger Repeller (1) innerhalb einer Repellerebene (6.1, 6.2) grösser ist als die Summe der Radien (1.3) der betrachteten Repeller (1) und diese Aussage für alle Repeller (1) der Repelleranordnung (2) gilt.

3. Selbstausrichtende Windturbinenanlage nach einem der Ansprüche 1 bis 2, wobei ein Repeller (1) der vorderen Repellerebene (6.1) drehzahlgel<oppelt ist mit mindestens einem Repeller (1) einer der hinteren Repellerebenen (6.2) und die drehzahlgel<oppelten Repeller (1) gemeinsam einen Generator (13) antreiben, und/oder wobei alle Repeller (1) der Repelleranordnung (2) aneinander drehzahlgel<oppelt sind und gemeinsam einen Generator (13) antreiben.

4. Selbstausrichtende Windturbinenanlage nach einem der Ansprüche 1 bis 3, wobei alle Mittelpunkte der Windhindernisse der Repelleranordnung (2) auf der konvexen Hülle (9) der Mittelpunkte (1.3) aller Windhindernisse der Repelleranordnung (2) liegen.

5. Selbstausrichtende Windturbinenanlage nach einem der Ansprüche 1 bis 4, wobei alle Repeller (1) Teil der Repelleranordnung (2) sind.

6. Selbstausrichtende Windturbinenanlage nach einem der Ansprüche 1 bis 5, wobei der Winkel zwischen einer Senkrechten auf die Repellerebene (6.1,6.2) und jeder der Verbindungslinien zwischen einem beliebigen Repeller (1) der ersten Repellerebene (6.1) und einem beliebigen Repeller (1) einer anderen als der ersten Repellerebene (6.2,6.3), grösser ist als arctan((r1+r2)/h), insbesondere grösser ist als 3°+arctan((r1+r2)/h), wobei r1 und r2 die Repellerradien (1.3) der betrachteten Repeller (1) sind und h der Abstand der Repellerebenen (6.1,6.2,6.3) voneinander ist, in welchen die betrachteten Repeller liegen.

7. Selbstausrichtende Windturbinenanlage nach einem der Ansprüche 1 bis 6, bei welcher alle Repeller (1) der Repelleranordnung (2), insbesondere alle Repeller (1), denselben Radius (1.3) haben.

8. Selbstausrichtende Windturbinenanlage nach einem der Ansprüche 1 bis 7, welches die Repelleranordnung (2) genau drei Repeller (1) umfasst, bevorzugt, bei welcher die Windturbinenanlage genau drei Repeller (1) umfasst.

9. Selbstausrichtende Windturbinenanlage nach Anspruch 8, bei welcher genau ein Repeller (1) der Repelleranordnung (2) mit Radius r1 mit seinem Mittelpunkt (1.2) in dervordersten Repellerebene (6.1) und genau zwei Repeller (1) der Repelleranordnung (2) mit Radius r2 mit ihren Mittelpunkten (1.2) in einer zweiten Repellerebene (6.2) angeordnet sind und die erste und die zweite Repellerebene (6.1, 6.2) den Abstand h voneinander haben, so dass die konvexe Hülle (9) der Mittelpunkte (1.2) ein gleichschenkliges Dreieck darstellt

10. Selbstausrichtende Windturbinenanlage nach Anspruch 8, bei welchem genau zwei Repeller (1) der Repelleranordnung (2) mit Radius r2 mit ihren Mittelpunkten (1.2) in der vordersten Repellerebene (6.1) und genau ein Repeller (1) der Repelleranordnung (2) mit Radius r1 mit seinem Mittelpunkt (1.2) in einer zweiten Repellerebene (6.2) angeordnet sind, so dass die konvexe Hülle (9) der Mittelpunkte (1.2) ein gleichschenkliges Dreieck darstellt.

11. Selbstausrichtende Windturbinenanlage nach einem der Ansprüche 9 oder 10, wobei der halbe Öffnungswinkel b des gleichschenkligen Dreiecks zwischen 10° und 50°, bevorzugt bei in etwa 25° liegt.

**12.** Selbstausrichtende Windturbinenanlage nach einem der Ansprüche 1 bis 11, umfassend Solarpaneele (14) die zumindest einen Teil, bevorzugt einen Anteil von mehr als 80% der Anordnungsfläche (7.1) bedecken, wobei die Solarpaneele (14) bevorzugt oberhalb der Mittelpunkte der Repeller (1.2) der Repelleranordnung und oberhalb von Verbindungselementen der Repeller der Repelleranordnung montiert sind und weiter bevorzugt in einem Bereich zwischen der Anordnungsebene (7) und einer Parallelebene im Abstand vom grössten vorkommenden Radius eines Repellers der Repelleranordnung darüber.

**13.** Selbstausrichtende Windturbinenanlage nach einem der Ansprüche 1 bis 12, wobei die Repeller (1) der Repelleranordnung, bevorzugt alle Repeller, Langsamläufer sind, die insbesondre eine Schnelllaufzahl $\lambda = \frac{2\pi nR}{v_1}$ von weniger oder gleich 6, bevorzugt von 3, haben wobei mit n die Anzahl Umdrehungen pro Zeiteinheit ist, R der Repellerradius (1.3) und v1 die ungestörte Windgeschwindigkeit.

**14.** Selbstausrichtende Windturbinenanlage nach einem der Ansprüche 1 bis 13, wobei jeder der Repeller sechs Flügel (1.1) aufweist.

**15.** Selbstausrichtende Windturbinenanlage nach einem der Ansprüche 1 bis 14, wobei alle Repeller (1) der Repelleranordnung (2), insbesondere alle Repeller, Radien (1.3) zwischen 0.5 und 5 m haben und besonders bevorzugt einen Radius von 1.5 m.

**Claims**

**1.** Self-aligning wind turbine system comprising

a) A repeller arrangement (2) with at least three wind obstacles rigidly arranged relative to each other, of which at least two, in particular all, wind obstacles are repellers (1),

(1) wherein each repeller (1) has at least one blade (1.1) which can rotate about an axis of rotation of the respective repeller (1), and wherein the repeller (1) is in its operating orientation when it is approached from the front, and wherein a foremost and furthest point (1. 11) of said wing (1.1) sweeping a circle defining a radius of the repeller (1.3) during a rotation about the axis of rotation, and a center of said circle lying on the axis of rotation and defining a center of the repeller (1.2), and wherein a repeller (1) is a wind obstacle, and
(2) wherein a wind obstacle, which is not a repeller (1), is shaped and arranged in such a way that in a configuration in which the wind flows against the repeller (1) from the front, its surface facing the wind is rotationally symmetrical about an axis of rotation of the wind obstacle which runs in the direction of the wind and which passes through the wind obstacle at a center point of the wind obstacle, and
(3) wherein the center points (1.3) of the at least three wind obstacles are arranged in at least two repeller planes (6.1, 6.2, 6.3) which are parallel to one another and spaced apart from one another, wherein the repeller planes (6.1, 6.2, 6.3) are perpendicular to the axes of rotation of the wind obstacles, in particular of the repellers (1), and all the repellers (1) of the repeller arrangement (2) are aligned identically, and
(4) wherein the center points of the at least three wind obstacles lie in a common arrangement plane (7) and the arrangement plane (7) is substantially perpendicular to the repeller planes (6.1, 6.2, 6.3) and a convex envelope (9) of all center points of all wind obstacles defines an arrangement surface (7.1), and
(5) wherein the arrangement surface (7.1) has an axis of symmetry (7.11) which is substantially parallel to the axes of rotation, and

b) the wind turbine assembly further comprises an axis of rotation (3.1) about which the repeller assembly (2) is rotatable to enable self-alignment, and
c) a point of penetration of the axis of rotation (3.1) through the arrangement surface (7.1) lies on the axis of symmetry (7.11) and in front of a load center of gravity (4), i.e., a center of gravity weighted with the respective flow resistance of the wind obstacles of the repeller arrangement (2) in the operating orientation

**characterized in that** at least two repellers (1) of the repeller arrangement (2) are speed-coupled to each other and the speed-coupled repellers (1) jointly drive a generator (13).

**2.** Self-aligning wind turbine system according to claim 1, wherein the distance between the centers (1.2) of any two repellers (1) within a repeller plane (6.1, 6.2) is greater than the sum of the radii (1.3) of the repellers (1) under consideration and this statement applies to all repellers (1) of the repeller arrangement (2).

3. Self-aligning wind turbine system according to one of the claims 1 to 2, wherein a repeller (1) of the front repeller plane (6.1) is speed-coupled with at least one repeller (1) of one of the rear repeller planes (6.2) and the speed-coupled repellers (1) jointly drive a generator (13), and/or wherein all repellers (1) of the repeller arrangement (2) are speed-coupled to one another and jointly drive a generator (13).

4. Self-aligning wind turbine system according to any one of claims 1 to 3, wherein all center points of the wind obstacles of the repeller arrangement (2) lie on the convex envelope (9) of the center points (1.3) of all wind obstacles of the repeller arrangement (2).

5. Self-aligning wind turbine system according to any of claims 1 to 4, wherein all repellers (1) are part of the repeller arrangement (2).

6. Self-aligning wind turbine system according to any one of claims 1 to 5, wherein the angle between a vertical to the repeller plane (6.1,6.2) and each of the connecting lines between any repeller (1) of the first repeller plane (6.1) and any repeller (1) of a repeller plane other than the first repeller plane (6. 2,6.3), is greater than arctan((r1 +r2)/h), in particular greater than 3°+arctan((r1+r2)/h), where r1 and r2 are the repeller radii (1.3) of the considered repellers (1) and h is the distance of the repeller planes (6.1,6.2,6.3) from each other in which the considered repellers lie.

7. Self-aligning wind turbine system according to any one of claims 1 to 6, in which all repellers (1) of the repeller arrangement (2), in particular all repellers (1), have the same radius (1.3).

8. Self-aligning wind turbine system according to any one of claims 1 to 7, which the repeller arrangement (2) comprises exactly three repellers (1), preferably in which the wind turbine system comprises exactly three repellers (1).

9. Self-aligning wind turbine system according to claim 8, wherein exactly one repeller (1) of the repeller arrangement (2) with radius r1 has its center (1.2) in the foremost repeller plane (6.1) and exactly two repellers (1) of the repeller arrangement (2) with radius r2 have their centers (1. 2) are arranged in a second propeller plane (6.2) and the first and second propeller planes (6.1, 6.2) are at a distance h from each other so that the convex envelope (9) of the centers (1.2) represents an isosceles triangle.

10. Self-aligning wind turbine system according to claim 8, in which exactly two repellers (1) of the repeller arrangement (2) with radius r2 are arranged with their centers (1.2) in the foremost repeller plane (6.1) and exactly one repeller (1) of the repeller arrangement (2) with radius r1 is arranged with its center (1.2) in a second repeller plane (6.2), so that the convex envelope (9) of the centers (1.2) represents an isosceles triangle.

11. Self-aligning wind turbine system according to one of claims 9 or 10, wherein the half opening angle b of the isosceles triangle is between 10° and 50°, preferably at in about 25°.

12. Self-aligning wind turbine system according to any one of claims 1 to 11, comprising solar panels (14) covering at least a part, preferably a part of more than 80% of the arrangement area (7.1), wherein the solar panels (14) are preferably located above the centers of the repellers (1. 2) of the repeller arrangement and above connecting elements of the repellers of the repeller arrangement and further preferably in an area between the arrangement plane (7) and a parallel plane at a distance from the largest occurring radius of a repeller of the repeller arrangement thereabove.

13. Self-aligning wind turbine system according to any one of claims 1 to 12, wherein the repellers (1) of the repeller

$$\lambda = \frac{2\pi nR}{v_1}$$

arrangement, preferably all repellers, are slow mover having in particular a tip-speed ratio $\lambda = \frac{2\pi nR}{v_1}$ of less than or equal to 6, preferably of 3, where n is the number of revolutions per unit time, R is the repeller radius (1.3) and v1 is the undisturbed wind speed.

14. The self-aligning wind turbine system of any one of claims 1 to 13, wherein each of the repellers has six blades (1.1).

15. Self-aligning wind turbine system according to any one of claims 1 to 14, wherein all of the repellers (1) of the repeller arrangement (2), in particular all of the repellers, have radii (1.3) between 0.5 and 5 m and particularly preferably a radius of 1.5 m.

**Revendications**

1. Installation de turbines éoliennes à auto-alignement, comprenant

    a) un agencement de répulsifs (2), pourvu d'au moins trois obstacles au vent, placés de manière rigide les uns par rapport aux autres, dont au moins deux, notamment tous les obstacles au vent sont des répulsifs (1),

    (1) chaque répulsif (1) comportant au moins une pale (1.1), susceptible de tourner autour d'un axe de rotation du répulsif (1) concerné, et le répulsif (1) se trouvant dans son alignement de service lorsqu'il subit un afflux par l'avant et lors d'une rotation autour de l'axe de rotation, un point (1.11) de la pale (1.1) citée, situé le plus à l'avant et le plus éloigné de l'axe de rotation effleurant un cercle qui définit un rayon du répulsif (1.3) et un point médian dudit cercle se situant sur l'axe de rotation et définissant un point médian du répulsif (1.2) et un répulsif (1) étant un obstacle au vent,
    et
    (2) un obstacle au vent, lequel n'est pas un répulsif (1) étant façonné et placé de telle sorte que dans une configuration selon laquelle le vent afflue sur les répulsifs (1) par l'avant, sa surface qui fait face au vent soit symétrique en rotation, à savoir autour d'un axe de rotation de l'obstacle au vent qui s'écoule dans la direction du vent et qui traverse l'obstacle au vent dans un point médian de l'obstacle au vent, et
    (3) les points médians (1.3) des au moins trois obstacles au vent étant placés dans au moins deux plans de répulsifs (6.1, 6.2, 6.3) situés à la parallèle les uns des autres et écartés les uns des autres, les plans de répulsifs (6.1, 6.2, 6.3) étant debout à la perpendiculaire des axes de rotation des obstacles au vent, notamment des répulsifs (1), et tous les répulsifs (1) de l'agencement de répulsifs (2) étant orientés à l'identique, et
    (4) les points médians des au moins trois obstacles au vent se situant dans un plan d'agencement (7) commun et le plan d'agencement (7) étant debout sensiblement à la perpendiculaire des plans de répulsifs (6.1, 6.2, 6.3) et une enveloppe convexe (9) de tous les points médians de tous les obstacles au vent définissant une surface d'agencement (7.1) et
    (5) la surface d'agencement (7.1) présentant un axe de symétrie (7.11) qui s'écoule sensiblement à la parallèle des axes de rotation et

    b) l'installation de turbines éoliennes comprenant par ailleurs un axe de rotation (3.1), autour duquel l'agencement de répulsifs (2) est susceptible de tourner et ainsi l'auto-alignement étant permis et
    c) un point de traversée de l'axe de rotation (3.1) se situant à travers la surface d'agencement (7.1) sur l'axe de symétrie (7.11) et à l'avant d'un point fort de contrainte (4), donc un point fort pondéré avec la résistance au flux respective des obstacles au vent de l'agencement de répulsifs (2) dans l'alignement de service,

    **caractérisée en ce qu'**au moins deux répulsifs (1) de l'agencement de répulsifs (2) sont mutuellement en régime couplé et **en ce que** les répulsifs (1) en régime couplé entraînent conjointement un générateur (13).

2. Installation de turbines éoliennes à auto-alignement selon la revendication 1, l'écart entre les points médians (1.2) de deux répulsifs (1) quelconques à l'intérieur d'un plan de répulsifs (6.1, 6.2) étant supérieur à la somme des rayons (1.3) des répulsifs (1) considérés et cette affirmation étant valable pour tous les répulsifs (1) de l'agencement de répulsifs (2) .

3. Installation de turbines éoliennes à auto-alignement selon l'une quelconque des revendications 1 à 2, un répulsif (1) du plan antérieur (6.1) de répulsifs étant en régime couplé avec au moins un répulsif (1) de l'un des plans postérieurs (6.2) de répulsifs et les répulsifs (1) en régime couplé entraînant conjointement un générateur (13) et / ou tous les répulsifs (1) de l'agencement de répulsifs (2) étant mutuellement en régime couplé et entraînant conjointement un générateur (13).

4. Installation de turbines éoliennes à auto-alignement selon l'une quelconque des revendications 1 à 3, tous les points médians des obstacles au vent de l'agencement de répulsifs (2) se situant sur l'enveloppe convexe (9) des points médians (1.3) de tous les obstacles au vent de l'agencement de répulsifs (2).

**5.** Installation de turbines éoliennes à auto-alignement selon l'une quelconque des revendications 1 à 4, tous les répulsifs (1) étant un élément de l'agencement de répulsifs (2).

**6.** Installation de turbines éoliennes à auto-alignement selon l'une quelconque des revendications 1 à 5, l'angle entre une perpendiculaire sur le plan de répulsifs (6.1, 6.2) et chacune des lignes de liaison entre un répulsif (1) quelconque du premier plan de répulsifs (6.1) et un répulsif (1) quelconque d'un autre que le premier plan de répulsifs (6.2, 6.3), étant supérieur à arctan((r1+r2)/h), étant notamment supérieur à 3°+arctan((r1+r2)/h), r1 et r2 étant les rayons de répulsif (1.3) des répulsifs (1) considérés et h étant l'écart mutuel entre les plans de répulsifs (6.1,6.2,6.3) dans lesquels se situent les répulsifs considérés.

**7.** Installation de turbines éoliennes à auto-alignement selon l'une quelconque des revendications 1 à 6, dans laquelle tous les répulsifs (1) de l'agencement de répulsifs (2), notamment tous les répulsifs (1) ont le même rayon (1.3).

**8.** Installation de turbines éoliennes à auto-alignement selon l'une quelconque des revendications 1 à 7, dans laquelle l'agencement de répulsifs (2) comprend exactement trois répulsifs (1), de préférence dans laquelle l'installation de turbines éolienne comprend exactement trois répulsifs (1).

**9.** Installation de turbines éoliennes à auto-alignement selon la revendication 8, dans laquelle exactement un répulsif (1) de l'agencement de répulsifs (2) de rayon r1 est placé par son point médian (1.2) dans le plan de répulsifs (6.1) le plus antérieur et exactement deux répulsifs (1) de l'agencement de répulsifs (2) de rayon r2 sont placés par leurs points médians (1.2) dans un deuxième plan de répulsifs (6.2) et le premier et le deuxième plans de répulsifs (6.1, 6.2) présentent entre eux l'écart h, de telle sorte que l'enveloppe convexe (9) des points médians (1.2) représente un triangle isocèle.

**10.** Installation de turbines éoliennes à auto-alignement selon la revendication 8, dans laquelle exactement deux répulsifs (1) de l'agencement de répulsifs (2) de rayon r2 sont placés par leurs points médians (1.2) dans le plan de répulsifs (6.1) le plus antérieur et exactement un répulsif (1) de l'agencement de répulsifs (2) de rayon r1 est placé par son point médian (1.2) dans un deuxième plan de répulsifs (6.2), de telle sorte que l'enveloppe convexe (9) des points médians (1.2) représente un triangle isocèle.

**11.** Installation de turbines éoliennes à auto-alignement selon l'une quelconque des revendications 9 ou 10, le demi angle d'ouverture b du triangle isocèle se situant entre 10° et 50°, de préférence à environ 25°.

**12.** Installation de turbines éoliennes à auto-alignement selon l'une quelconque des revendications 1 à 11, comprenant des panneaux solaires (14) qui recouvrent au moins une partie, de préférence un pourcentage de plus de 80 % de la surface d'agencement (7.1), les panneaux solaires (14) étant montés de préférence au-dessus des points médians des répulsifs (1.2) de l'agencement de répulsifs et au-dessus d'éléments de liaison des répulsifs de l'agencement de répulsif et de préférence par ailleurs, dans une zone entre le plan d'agencement (7) et un plan parallèle, avec un écart par rapport au plus grand rayon existant d'un répulsif de l'agencement de répulsif, au-dessus de celui-ci.

**13.** Installation de turbines éoliennes à auto-alignement selon l'une quelconque des revendications 1 à 12, les répulsifs (1) de l'agencement de répulsifs, de préférence tous les répulsifs étant des répulsifs à vitesse lente, qui font preuve notamment d'une vitesse spécifique $\lambda = \dfrac{2\pi\pi R}{v1}$ inférieure ou égale à 6, de préférence de 3, n désignant le nombre de tours par unité de temps, R désignant le rayon des répulsifs (1.3) et v1 désignant la vitesse du vent non perturbé.

**14.** Installation de turbines éoliennes à auto-alignement selon l'une quelconque des revendications 1 à 13, chacun des répulsifs comportant six pales (1.1).

**15.** Installation de turbines éoliennes à auto-alignement selon l'une quelconque des revendications 1 à 14, tous les répulsifs (1) de l'agencement de répulsifs (2), notamment tous les répulsifs ayant des rayons (1.3) compris entre 0.5 et 5 m et de préférence un rayon de 1.5 m.

Fig. 1

Fig. 2

Fig. 3a

Fig. 3b

Fig. 3c

Fig. 3d

Fig. 3e

# Fig. 4

# Fig. 5a

# Fig. 5b

# Fig. 6a

# Fig. 6b

Fig. 7a

Fig. 7b

Fig. 8a

Fig. 8b

## Fig. 9a

Y=1.5,
b=60°,
p=1/3

## Fig. 9b

Y=1.5,
b=60°,
p=1/6

## Fig. 10

12

1

1

13

1

3.1

## Fig. 11a

1.5

1.6

1

1.5

13

1

1.6

15

3.1

7.1

1

1.6

1.5

14

## Fig. 11b

1

14

1

1.6

1.5

15

1.5

3.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02073032 A
- DE 19846796
- DE 102009040648 A1
- US 6749399 B
- WO 2010098813 A
- US 2015247486 A1